# EUROPEAN PATENT SPECIFICATION

(11) **EP 1 475 357 B1**
(45) Date of publication and mention of the grant of the patent: **23.05.2012**
(21) Application number: 03700588.1
(22) Date of filing: 15.01.2003
(51) Int. Cl.: C03B 33/03, C03B 33/037, B28D 5/00, G02F 1/1333, B23Q 16/06

(54) **FRAGILE MATERIAL SUBSTRATE PARTING SYSTEM**
SYSTEM ZUM TEILEN VON SUBSTRAT AUS FRAGILEM MATERIAL
SYSTEME DE DIVISION DE SUBSTRAT EN MATERIAU FRAGILE

(30) Priority: 16.01.2002 JP 2002008054
(43) Date of publication of application: 10.11.2004
(73) Proprietor: Mitsuboshi Diamond Industrial Co., Ltd., Suita-shi, Osaka 564-0044 (JP)
(72) Inventor: EJIMATANI, Akira, Suita-shi, Osaka 564-0044 (JP); OKAJIMA, Yasutomo, Suita-shi, Osaka 564-0044 (JP); NISHIO, Yoshitaka, Suita-shi, Osaka 564-0044 (JP)
(74) Representative: TBK
(86) International application number: PCT/JP2003/000296
(87) International publication number: WO 2003/072516

(56) References cited:
- EP-A1- 0 773 194
- WO-A1-02/57192
- GB-A- 836 933
- JP-A- 8 197 402
- JP-A- 8 217 476
- JP-A- 8 225 332
- JP-A- 9 278 473
- JP-A- 10 277 899
- JP-A- 11 116 260
- JP-A- 2000 167 745
- JP-A- 2000 210 901
- JP-A- 2000 264 657

## Description

### TECHNICAL FIELD

The present invention relates to a brittle material substrate scribing and breaking system for scribing and breaking a brittle material substrate, and a brittle material substrate scribing and breaking system for scribing and breaking a brittle material substrate, and thereafter, polishing each end face of the brittle material substrate.

### BACKGROUND ART

As usedherein, a brittle material substrate includes a glass substrate, a semiconductor substrate, a ceramic substrate, and the like. A brittle material substrate further includes a bonded brittle material substrate obtained by bonding two brittle material substrates together.

A bonded brittle material substrate includes a flat display obtained by bonding two glass substrates together, such as a liquid crystal panel, a plasma display, an organic EL display panel, or the like, a projector substrate obtained by bonding a semiconductor substrate with a glass substrate, and the like. Hereinafter, a liquid crystal panel will be illustrated and explained.

A liquid crystal panel is widely used in a liquid crystal personal computer, a liquid crystal television, a mobile telephone, and the like. Further, a liquid crystal panel is expected to be applied to use as an electronic paper.

In a production process of such a liquid crystal panel, a mother glass substrate on which a matrix-like conductor pattern is formed in each of a plurality of regions, is fabricated. Thereafter, a seal material is applied onto the mother glass substrate to surround the conductor pattern formed in each region. Next, the mother glass substrate having the applied seal material is bonded with another mother glass substrate.

After a pair of the mother glass substrates are bonded together, one of the pair of mother glass substrates bonded is scribed with a glass scriber between each region on which a conductor pattern has been formed. Thereafter, the pair of mother glass substrates scribed is inverted with an inverting mechanism. A breaking machine exerts a pressing force onto a surface of the pair of mother glass substrates inverted opposite to the surface which has been scribed, along a scribed line formed with a glass scriber, thereby breaking the pair of mother glass substrates into liquid crystal panels. A glass substrate polishing apparatus polishes an edge of each end face of the separated liquid crystal panel. Thereafter, liquid crystal is injected into the separated liquid crystal panel.

The glass scriber uses a bridge mechanism or a transport mechanism to scribe a mother glass substrate. The bridge mechanism moves a cutter supporting mechanism with respect to a mother glass substrate so that the blade edge of a cutter for scribing the mother glass substrate is positioned on a predetermined scribing line for the mother glass substrate. The transport mechanism moves a mother glass substrate with respect to the blade edge of a cutter so that a predetermined scribing line for the mother glass substrate is positioned under the blade edge of the cutter.

The bridge mechanism comprises a first rail and a second rail which are provided in parallel on both sides of a table on which a mother glass substrate is placed. The first rail and the second rail are engaged with a first supporting post and a second supporting post, respectively. A guide bar which is provided across the table, is connected to the first supporting post and the second supporting post. The guide bar has a scribing portion which is provided in a manner such that it can be freely reciprocated in a direction perpendicular to the first rail and the second rail. The scribing portion scribes a mother glass substrate placed on the table. The bridge mechanism is provided with a motor for causing the first supporting post and the second supporting post to reciprocate along the first rail and the second rail, respectively. The motor is connected to a driver for controlling the motor. The driver is connected to a controller for synchronously controlling the driver.

In the thus-constructed bridge mechanism, when the controller transmits a control signal to operate the driver, the driver drives the motor in accordance with the control signal transmitted from the controller. The driven motor causes the first supporting post and the second supporting post, which are engaged with the first rail and the second rail, respectively, to reciprocate so that the scribing portion provided on the guide bar connected to the first supporting post and the second supporting post is moved onto a position corresponding to a predetermined scribing line on the mother glass substrate placed on the table. The scribing portion, which has been moved onto the position corresponding to the predetermined scribing line, scribes the mother glass substrate.

The glass scriber scribes the mother glass substrate along predetermined scribing lines orthogonal to one another, which have been previously established on the mother glass substrate. The glass scriber scribes along a predetermined direction the mother glass substrate placed on a rotating table which is rotatably provided. Thereafter, the rotating table is rotated by 90° using a direct drive servo motor provided along a rotational axis and the mother glass substrate on the rotating table is scribed along a predetermined direction. In this manner, the glass scriber forms scribed lines, which are orthogonal to one another, on the mother glass substrate.

The above-described mother glass substrate scribed using the scriber is separated into liquid crystal panels using the breaking machine. Thereafter, liquid crystal is injected into each liquid crystal panel and its injection opening is sealed through a liquid crystal injecting step, a liquid crystal sealing step, and the like.

The glass substrate polishing apparatus, which polishes an edge of each end face of a liquid crystal panel having the injected liquid crystal, is provided with a suction table for suctioning and fixing a liquid crystal panel. The glass substrate polishing apparatus is also provided with a polishing machine for polishing an edge of an end face of a liquid crystal panel suctioned and fixed to the suction table.

In the above-described production process of a liquid crystal panel, the two glass substrates bonded together and a seal material provided therebetween constitute a space (gap) in the separated liquid crystal panel and liquid crystal is injected into the space by evacuating the space. A long time is required for injecting liquid crystal in such a manner. To solve this problem, another method for producing a liquid crystal panel has been proposed, which comprises a step (called a drop injection step) of dropping liquid crystal onto a region surrounded by a seal material applied to a glass substrate, and thereafter, bonding two glass substrates together. In this liquid crystal panel production method, a mother glass substrate, in each of a plurality of regions of which a matrix-like conductor pattern is provided, is produced, and a seal material is applied to the mother glass substrate to surround the conductor pattern in each region.

Next, liquid crystal is dropped onto the mother glass substrate having the applied seal material. Thereafter, the mother glass substrate having the dropped liquid crystal is bonded with another mother glass substrate. After a pair of the mother glass substrates are bonded together, a surface of one glass substrate of the pair of mother glass substrates bonded is scribed with a glass scriber between each region having the conductor pattern. Thereafter, the pair of mother glass substrates are inverted. The breaking machine breaks one glass substrate of the pair of mother glass substrates inverted along the scribed lines formed on the one glass substrate using a glass scriber, and similarly breaks the other glass substrate of the pair of mother glass substrates, thereby separating the pair of mother glass substrates into liquid crystal panels. The glass substrate polishing apparatus polishes each side edge of the separated liquid crystal panels.

However, in the case where the above-described rotating table is used to scribe a mother glass substrate along scribed lines orthogonal to one another, torque required for the rotation of a rotating table on which a mother glass substrate is placed is increased as the size of a mother glass substrate to be scribed is increased with an increase in the size of a liquid crystal panel. Therefore, a larger motor is required, leading to an increase in manufacturing cost. In addition, as the size of a mother glass substrate is increased, the radius of a rotating table on which the mother glass substrate is placed is increased. The positioning precision of a rotating table is determined depending on the resolution of a rotational angle of the rotatingtable. Therefore, a required positioning precision is not likely to be obtained at the side edge of a rotating table at a distance from the rotational axis of the rotating table.

Also, in the case of the above-described bridge mechanism, a single motor is used to move the first supporting post and the second supporting post. Therefore, when a mechanical delay occurs in any one of the first supporting post and the second supporting post, the supporting post having the mechanical delay is dragged and moved by the other supporting post. Therefore, the first supporting post and the second supporting post cannot be moved smoothly.

In addition, in production lines of flat display panels, the size of mother glass substrates employed tends to be increased more and more, raising problems which cannot be sufficiently solved by conventional apparatuses. As an example of a flat display panel production line, a scribing and breaking line for a liquid crystal panel will be illustrated and discussed. In this production line, a large bonded mother glass substrate obtained by bonding a pair of mother glass substrates together is separated into panels having a smaller dimension (a predetermined size). Therefore, a line structure mainly comprises a scribing apparatus, a breaking apparatus, and a polishing apparatus. The following problems occur in such a line structure as the size of a bonded mother glass substrate is increased.

### (1) Scribing apparatus

The size of a table on which a bonded mother glass substrate is to be placed is increased, and a larger motor is required for the rotation of such a table, resulting in an increase in manufacturing cost of a scribing apparatus. In addition, the radius of rotation of a table is increased, and therefore, the positioning precision is insufficient at a distance from the center of rotation. The same positioning precision is required for a larger bonded mother glass substrate. In addition, when a bridge mechanism having a scribing means is employed, the span of the bridge is elongated and it is therefore difficult to smoothly reciprocate a pair of supporting posts.

### (2) Breaking apparatus

In a certain line structure, after scribing, a bonded mother glass substrate is inverted, and a portion facing a scribed line is pressed so that a vertical crack proceeds to separate (break) a bonded mother glass substrate. For such a line structure, a bonded mother glass substrate having a larger dimension requires a larger inverting mechanism. In addition, a pressing force required for breaking is also increased, whereby it is difficult to obtain a stable breaking operation.

### (3) Polishing apparatus

When it is necessary to polish a bonded mother glass substrate having a distinct substrate dimension, it takes a long time to change a table dimension. Manufacturers desire to reduce such time as much as possible.

Further, in the structure of the above-described glass substrate polishing apparatus, every time the size of a glass substrate constituting a liquid crystal panel to be processed is changed, a suction table has to be exchanged with one that has a size suitable for the changed glass substrate size. Steps for changing a suction table are disadvantageously required.

In a liquid crystal panel production process comprising the above-described step called drop injection step, liquid crystal is dropped onto a mother glass substrate, the mother glass substrate is bonded with another mother glass substrate, and the pair of mother glass substrates are broken. In this case, the liquid crystal between the pair of mother glass substrates is likely to be damaged by breaking.

The prior art according to reference GB 836 933 A discloses an improvement in indexing tables for machine tools. This prior art shows two arrangements as alternatives for making a fine-adjustment of a rotational position of a table by using a roller which contacts to the outer periphery of the table with making a scale as a standard to present a mechanism for positioning the rotating table, and for fastening packs provided at a predetermined position of a rotatable table by means of an abutment.

In a further prior art disclosed in JP 11 116260 A a scribing an breaking system is explained which includes commonly known means for performing the required actions for such a system.

It is the object of the present invention to provide a scribing and breaking system having an apparatus structure which can be expected to solve problems arriving in increasing the size of a substrate, and improve the tact time.

The object is solved by a scribing and breaking system having the combination of the features of claim 1. Further advantageous developments are defined in the dependent claims.

### DISCLOSURE OF THE INVENTION

A scribing and breaking system for a brittle material substrate according to the present invention comprises a rotating table rotatably provided for placing a brittle material substrate, a rotating table driving means for rotating the rotating table, a first positioning means for positioning the rotating table rotated by the rotating table driving means with a predetermined first precision, a second positioning means for positioning the rotating table, which has been positioned by the first positioning means with the predetermined first precision, with a second precision higher than the predetermined first precision, and a scribing means for scribing the brittle material substrate on the rotating table, which has been positioned by the second positioning means, along a predetermined direction.

The rotating table may comprise a rotating portion which is rotated by the rotating table driving means and a fixing portion which supports the rotating portion. The rotating portion may be provided with a stopper member for positioning a rotational position of the rotating portion with the predetermined first precision in a manner such that the stopper member protrudes from an outer circumference of the rotating portion. The stopper member provided on the rotating portion may be rotated from a first position by a predetermined angle to reach a second position. The first positioning means may be fixed to the fixing portion in a manner such that the first positioning means positions the stopper member, which has reached the second position, with the first precision.

The second positioning means may have a fine adjustment mechanism which is provided in a manner such that the fine adjustment mechanism can abut the stopper member which has been positioned by the first positioning means with the first precision. The fine adjustment mechanism may be reciprocated along a rotational direction of the stopper member to position the stopper member with the second precision higher than the predetermined first precision. The brittle material substrate may be placed on the rotating portion. When the stopper member is located at the first position, the scribing means may scribe the brittle material glass substrate placed on the rotating portion along the predetermined direction. When the stopper member is positioned at the second position rotated by about 90° from the first position by the fine adjustment mechanism with the second precision higher than the predetermined first precision, the glass substrate placed on the rotating portion having the stopper member may be scribed along the predetermined direction.

The second positioning means may further have a fine adjustment mechanism driving means for driving the fine adjustment mechanism along a tangential direction with respect to a rotating circle of the stopper member, a sensor for detecting a rotational position of the stopper member, and a control means for controlling the fine adjustment mechanism driving means based on the rotational position of the stopper member detected by the sensor.

The fine adjustment mechanism driving means may have a converting mechanism for converting a rotational movement to a reciprocating movement so that the fine adjustment mechanism is reciprocated, and a rotating means for rotating the converting mechanism.

The rotating table has a rack provided in a concentric circle having a rotational axis of the rotating table as a center thereof. The rotating table driving means may have a pinion engaged with the rack and a rotating means f or rotating the pinion.

A scribing and breaking system for a brittle material substrate according to the present invention comprises the at least one scriber for the brittle material substrate, and the brittle material substrate polishing apparatus for polishing a side edge of the broken brittle material substrate after the brittle material substrate scribed by the scriber for the brittle material substrate has been broken.

The scribing means is a cutter wheel chip.

The cutter wheel chip has a blade edge formed at a ridgeline portion of the disk-like wheel. A plurality of groove portions are formed at the ridgeline portion at a predetermined pitch.

The cutter wheel chip is vibrated with respect to a glass substrate so that a pressing force on the glass substrate is changed periodically.

The cutter wheel chip is elevated and lowered by a servo motor.

The scribing means is moved along a predetermined scribing line after a difference between a scribed line generated when positioning a brittle material substrate and the predetermined scribing line is corrected.

### BRIEF DESCRIPTION OF THE DRAWINGS

Figure **1** is a perspective view of a glass scriber according to Embodiment 1.
Figures **2A** to **2C** show a configuration of a rotating table mechanism provided in the glass scriber of Embodiment 1. Figure **2A** is a plan view showing the rotating table mechanism of Embodiment 1. Figure **2B** is a front view of the rotating table mechanism of Embodiment 1. Figure **2C** is a cross-sectional view taken along line C-C of Figure **2A****.**
Figure **3** is a perspective view of a glass substrate processing machine according to Comparative example 2.
Figure **4** is a plan view of the glass substrate processing machine of Comparative example 2.
Figure **5** is a plan view of a glass substrate polishing apparatus according to Comparative example 3.
Figure **6** is a plan view of a polishing table provided in the glass substrate polishing apparatus of Comparative example 3.
Figure 7 is a plan view explaining an operation of the glass substrate polishing apparatus of Comparative example 3.
Figure **8** is a perspective view of a glass scriber according to Comparative example 4.
Figure **9** is a plan view explaining a major portion of the glass scriber of Comparative example 4.
Figure **10** is a front view explaining a first cutter wheel chip and a second cutter wheel chip provided on a first scribing mechanism and a second scribing mechanism, respectively, according to Comparative example 4.
Figure **11** is a diagram for explaining a scribing operation of the glass scriber of Comparative example 4.
Figure **12** is a diagram for explaining a scribing operation of the glass scriber of Comparative example 4.
Figure **13** is a diagram for explaining a scribing operation of the glass scriber of Comparative example 4.
Figure **14** is a diagram for explaining a scribing operation of the glass scriber of Comparative example 4.
Figure **15** is a diagram showing a configuration of a liquid crystal panel scribing and breaking line using the glass scriber of Comparative example 4.
Figure **16** is a diagram showing a configuration of another liquid crystal panel scribing and breaking line using the glass scriber of Comparative example 4.
Figure **17** is a diagram showing a configuration of still another liquid crystal panel scribing and breaking line using the glass scriber of Comparative example 4.
Figure **18** is a diagram showing a configuration of still another liquid crystal panel scribing and breaking line using the glass scriber of Comparative example 4.
Figure **19** is configuration diagram of a scribing and breaking line as a further comparative example.
Figure **20** is a diagram showing a configuration of still another liquid crystal panel scribing and breaking line using the glass scriber Comparative example 4.
Figure **21** is a diagram showing a configuration of still another liquid crystal panel scribing and breaking line using the glass scriber of Embodiment 1.

### BEST MODE FOR CARRYING OUT THE INVENTION

### (Embodiment 1)

A glass scriber according to Embodiment **1** positions a large size mother glass substrate with low cost and required precision.

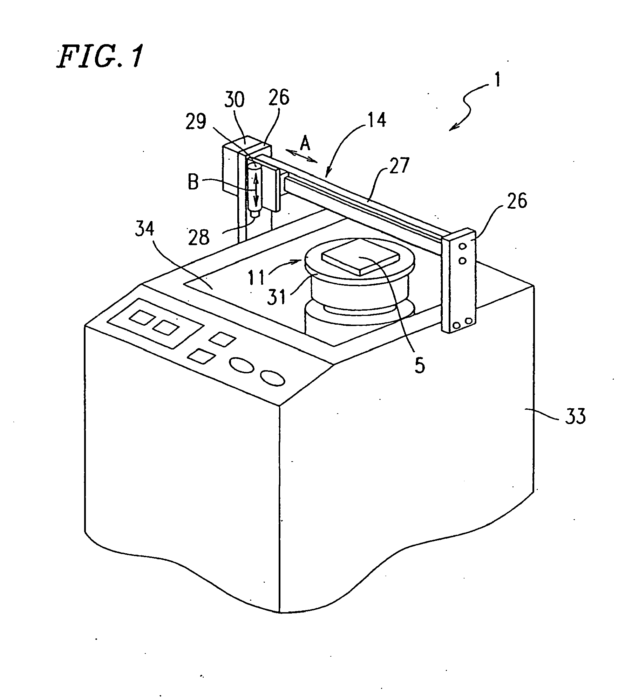

Figure **1** is a perspective view of a glass scriber **1** according to Embodiment **1**. The glass scriber **1** comprises an opening portion **34** which is formed on an upper surface thereof, and a body **33** in substantially the shape of a rectangular prism. A rotating table **11** on which a mother glass substrate **5** is to be placed is provided at the opening portion **34** of the body **33**.

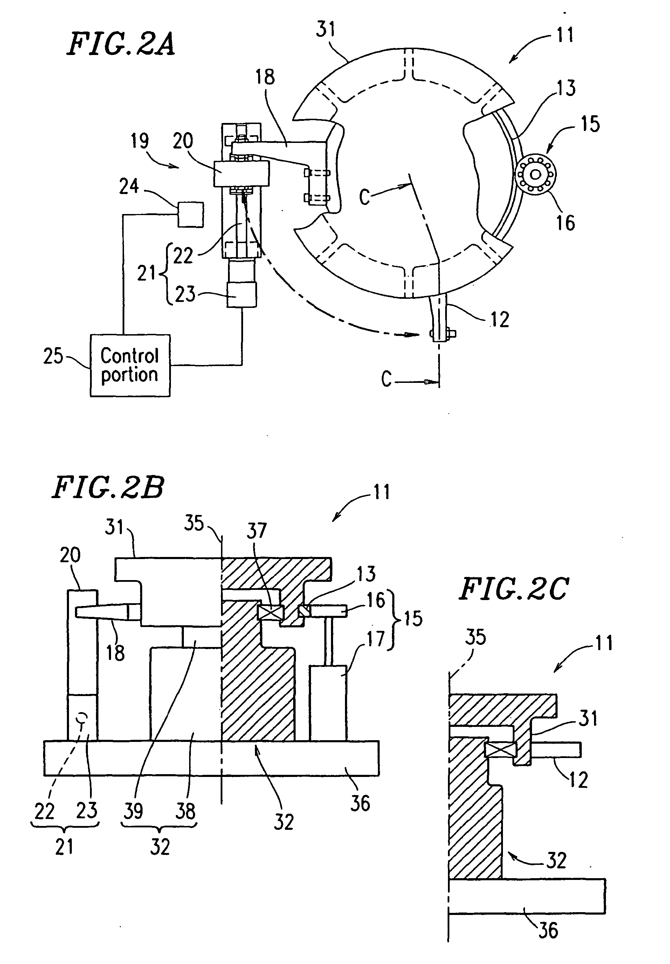

Figure **2A** is a plan view showing a concrete configuration of the rotating table **11** and its peripheral mechanism, and Figure **2B** is a front view thereof. Figure **2C** is a cross-sectional view taken along line C-C of Figure **2A****.** The rotating table **11** is provided with a rotating portion **31.** The rotating portion **31** has a circular groove portion having an opening facing downward. The rotating portion **31** is provided in a manner such that it can be freely rotated around a rotational axis **35** along a perpendicular direction. The rotating table **11** comprises a fixing portion **32**. The fixing portion **32** has a base portion **38** in the shape of substantial a cylinder. The base portion **38** is fixed to a base **36.** The fixing portion **32** has a support portion **39** provided at substantially a middle of an upper surface of the base portion **38**. The support portion **39** is in substantially the shape of a cylinder, and supports the rotating portion **31** via a bearing **37** so that the rotating portion **31** can be freely rotated. The rotating portion **31** is provided so that the opening portion thereof covers the support portion **39**. On an outer circumference of the rotating portion **31,** a rack **13** having a central angle of slightly greater than 90° is formed on a concentric circle having a rotational axis **35** as the center thereof.

The glass scriber **1** comprises a rotating table driving mechanism **15** which rotates the rotating portion **31** around the rotational axis **35**. The rotating table driving mechanism **15** comprises a pinion **16** which is engaged with the rack **13** formed on the outer circumference of the rotating portion **31**, and a motor **17** which is fixed to the base **36** and rotates the pinion **16**.

On the outer circumference of the rotating portion **31**, a first stopper member **18** for positioning the rotation position of the rotating portion **31** at a predetermined first position and a second stopper member **12** for positioning the rotation position of the rotating portion **31** at a predetermined second position are provided. The first stopper member **18** and the second stopper member **12** are attached to the outer circumference of the rotating portion **31** in a manner such that the first stopper member **18** and the second stopper member **12** protrude outward from the outer circumference of the rotating portion **31.** In the state of Figure **2A**,thefirststoppermember 18abutsafineadjustment mechanism **20** with positioning having been completed, and the rotating portion **31** is positioned at a first position. The second stopper member **12** is attached to the rotating portion **31** at an angle of about 90° from the first stopper member **18**. When the second stopper member **12** reaches a position at an angle of about 90° in the clockwise direction (a second position of the rotating portion **31**), the second stopper member **12** is positioned with predetermined precision.

The glass scriber **1** comprises a positioning mechanism **19.** In the positioning mechanism **19,** by abutting the fine adjustment mechanism **20,** the first stopper member **18** and the second stopper member **12** which has been positioned with the first precision, are positioned with the second precision higher than the first precision. The fine adjustment mechanism **20** of the positioning mechanism **19** is in substantially the shape of a rectangle. The fine adjustment mechanism **20** is disposed between the first stopper member **18** and the second stopper member **12.** In Figure **2A****,** the second stopper member **18** abuts the fine adjustment mechanism **20** so that the rotating portion **31** is positioned at a first position. The fine adjustment mechanism **20** is provided in a manner such that it is freely reciprocated in minute amounts along a direction of a tangent of a rotating circle of the second stopper member **12**. The positioning mechanism **19** has a fine adjustment mechanism driving mechanism **21** which causes the fine adjustment mechanism **20** to reciprocate along its movement direction in minute amounts. The fine adjustment mechanism driving mechanism **21** has a ball screw **22** which is provided along the movement direction of the second stopper member **12**. The ball screw **22** converts a rotational movement to a reciprocating movement so that the fine adjustment mechanism **20** reciprocates along the movement direction. The fine adjustment mechanism driving mechanism **21** has a motor **23** which is connected to the ball screw **22**. The motor **23** rotates the ball screw **22**. The positioning mechanism **19** is provided with a sensor **24** for detecting the rotational position of the second stopper member **12** and a control portion **25** for controlling the motor **23** based on the rotational position of the second stopper member **12** detected by the sensor **24**.

The glass scriber **1** comprises a scribing mechanism **14** for scribing a mother glass substrate **5** placed on the rotating portion **31** provided on the rotating table **11** along a direction indicated by an arrow **A**. The scribing mechanism **14** is provided with a pair of supporting posts **26** which are attached to the body **33** on opposite surfaces of the rotating table **11** in a manner such that the supporting posts **26** protrude upward. A guide bar **27** in which a guide groove is formed in the direction indicated by the arrow **A**, is connected to the pair of supporting posts **26** in a manner such that the guide bar **27** extends across the mother glass substrate **5** placed on the rotating portion **31** of the rotating table **11**. The scribing mechanism **14** is provided with a scribing head **29** at a lower end thereof. The scribing head **29** holds a chip holder which bears a cutter wheel chip **28** in a manner such that the cutter wheel chip **28** can be freely rotated. The scribing head **29** is provided in a manner such that it can freely slide along the guide groove formed in the guide bar **27.** The scribing head **29** is driven by a driving mechanism **30** which rotates a ball screw (not shown) to slide along the guide groove. The cutter wheel chip **28** is provided in a manner such that it can move upward and downward by a driving mechanism (not shown) in the scribing head **29**.

In the glass scriber **1** having the above-described configuration, as shown in Figure **2A**, the first stopper member **18** is positioned with the second precision by the positioning mechanism **19** so that the rotating portion **31** is located at the first position. The cutter wheel chip **28** attached to the scribing head **29** is lowered along a direction indicated by an arrow **B** by a driving mechanism (not shown) to a position at which the cutter wheel chip **28** abuts a surface of the mother glass substrate **5.** A pressing mechanism incorporated in the scribing head **29** presses the cutter wheel **28** against the mother glass substrate **5.** When the driving mechanism **30** causes the scribing head **29** to slide along the guide groove, the cutter wheel **28** is rolled on the mother glass substrate **5,** pressing the mother glass substrate **5.** Thereby, the mother glass substrate **5** placed on the rotating table **11** is scribed along the direction indicated by the arrow **A.** Thereafter, the motor **17** provided in the rotating table driving mechanism **15** rotates the pinion **16** in a predetermined direction, so that the rotating portion **31** to which the rack **13** engaged with the pinion **16** is attached, is rotated by about 90° around the rotational axis **35**. The second stopper member **12** attached to the rotating portion **31** is rotated together with the rotating portion **31** by about 90° in the clockwise direction to abut the fine adjustment mechanism **20** at the second position of the rotating portion **31**. The second stopper member **12** abutting the fine adjustment mechanism **20** is firstly positioned with the predetermined first precision by abutting the fine adjustment mechanism **20**. The predetermined first precision is, for example, about 0.1 mm.

When the second stopper member **12** is positioned with the predetermined first precision, the sensor **24** detects the rotational position of the second stopper member **12** positioned with the predetermined first precision. The control portion **25** drives the motor **23** based on the rotational position of the stopper member **12** detected by the sensor **24** in a manner such that the second stopper member **12** is positioned with the second precision higher than the predetermined first precision. The ball screw **22** converts the rotational movement of the motor **23** driven by the control portion **25** to linear movement. The fine adjustment mechanism **20** is moved in minute amounts by the ball screw **22** so that the rotational position of the stopper member **12** is positioned with the second precision higher than the predetermined first precision. The second precision is, for example, about 0.01 mm.

Thus, according to Embodiment **1**, the first stopper member **18** and the second stopper member **12** are rotated to abut the fine adjustment mechanism **20** so that they are positioned with the first precision. Thereafter, the positioning mechanism **19** positions the first stopper member **18** and the second stopper member **12** with the second precision higher than the predetermined first precision.

Therefore, even when the size of a mother glass substrate is increased and the radius of a rotating table on which a mother glass substrate is to be placed is increased, required positioning precision can be obtained.

In addition, the pinion **16** engaged with the rack **13** formed on the outer circumference of the rotating portion **31** is rotated by the motor **17,** thereby rotating the rotating table **11.** Therefore, the rotating table **11** on which a large size mother glass substrate is placed, can be rotated by a required torque using a small size motor.

As the cutter wheel chip **28** of Embodiment 1, a cutter wheel chip disclosed in commonly-assigned Japanese Patent No. 3074143 is preferably used. The cutter wheel chip has a blade edge which is formed at a ridgeline portion of the disk-like wheel with a plurality of groove portions being formed at a predetermined pitch. By using such a cutter wheel chip, a vertical crack can be easily formed along the thickness direction of the mother glass substrate **5**.

Therefore, of the scribing step and the breaking step which are conventionally required for scribing and breaking a mother glass substrate, the breaking step can be eliminated.

It should be noted that the above-described cutter wheel chip having a plurality of groove portions formed at the ridgeline portion of the disk-like wheel may not be used. Alternatively, a cutter wheel chip may be vibrated to periodically vary the pressing force of the cutter wheel chip against the mother glass substrate **5**, thereby scribing the mother glass substrate **5**. Also in this case, a vertical crack can be easily formed along the thickness direction of the mother glass substrate **5**.

By using this scribing method, the breaking step can be eliminated of the scribing step and the breaking step which are conventionally required for scribing and breaking a mother glass substrate.

In addition, the cutter wheel chip **28** of Embodiment 1 may be elevated or lowered by the rotation of a servo motor, so that the rotational torque of the servo motor may be transferred to the cutter wheel chip **28** and the scribing pressure of the cutter wheel chip **28** to the glass substrate may be changed. By elevating and lowering the cutter wheel chip **28** by the rotation of the servo motor, the elevating/lowering mechanism for the cutter wheel chip **28** can be simplified, resulting in an increase in economy. In addition, the position (0-point position) of a glass substrate at which the cutter wheel chip **28** contacts it, can be detected based on a change in rotation of the servo motor. Therefore, a mechanical mechanism for detecting such a position is unnecessary. In addition, since the scribing pressure can be easily changed with high precision by the rotation of the servo motor, whereby it is made possible to easily support the different kinds, shapes, and the like of a glass substrate.

It should be noted that, in this case, the present invention is not limited to a structure that the cutter wheel chip **28** is elevated and lowered directly by the rotation of the servo motor, and alternatively, the cutter wheel chip **28** may be elevated and lowered by using gears to convert the rotational movement of the servo motor to upward and downward movement.

In addition, when scribing, the cutter wheel chip **28** may be elevated and lowered by rotating the servo motor by position control, and a rotational torque which acts to return the cutter wheel chip **28** to a position set by the servo motor when the cutter wheel chip **28** is not positioned at the set position, may be controlled and may be transferred as scribing pressure to the cutter wheel chip **28**. In this case, the cutter wheel chip **28** is preferably designed in a manner such that the position of the cutter wheel chip **28** is lowered by a predetermined amount from the upper surface of the glass substrate at substantially the same time as the start of scribing.

Thus, in the case where the position of the cutter wheel chip **28** along an upward direction and a downward direction is controlled by the servo motor when scribing, the scribing pressure of the cutter wheel chip **28** may be temporarily enhanced upon scribing across a scribed line which has already been formed. Alternatively, the rotational torque of the servo motor may be controlled to be a limited value previously set, when the cutter wheel chip **28** is moved on a glass substrate. In either case, even when a scribed trace swells the glass substrate as a result of forming the scribed line, it is possible to prevent the cutter wheel chip **28** from jumping when traveling across the scribed line.

### (Comparative example 2)

A glass scriber according to Comparative example 2 causes supporting posts supporting a guide bar to which a scribing portion is attached to move smoothly.

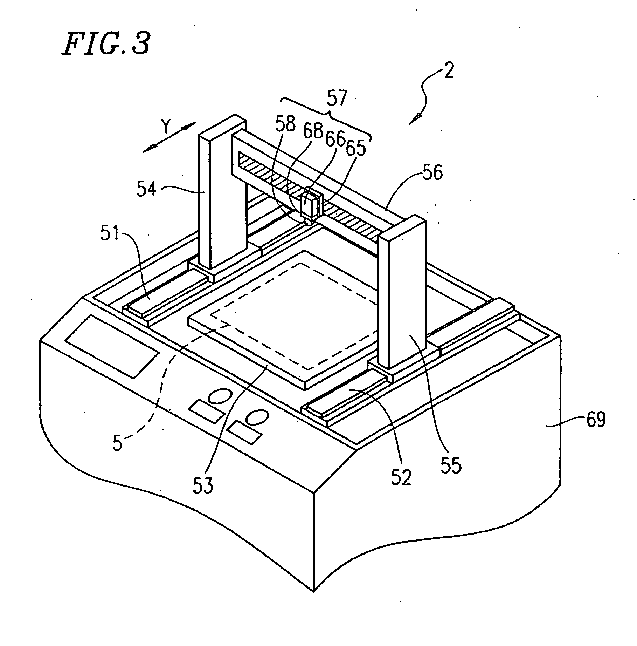

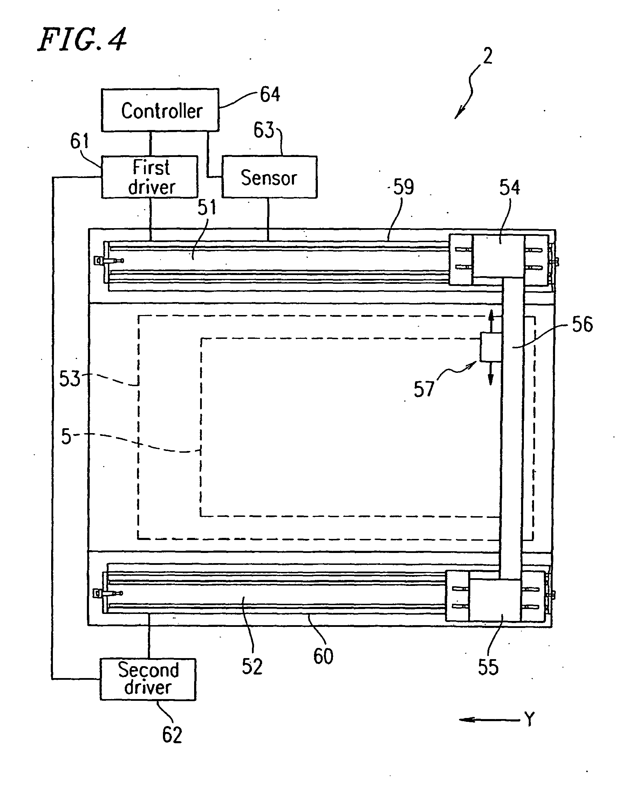

Figure **3** is a perspective view of a glass scriber 2 according to Comparative example 2 and Figure 4 is a plan view showing its major portion. The glass scriber **2** comprises a body **69** in substantially the shape of a rectangle. On an upper surface of the body **69,** a table **53** on which a mother glass substrate **5** is to be placed is provided. On both sides of the table **53,** rails **51** and **52** which are arranged in parallel are provided. The rails **51** and **52** are engaged with supporting posts **54** and **55** which are provided in a manner such that they protrude upward and are freely reciprocated along a direction indicated by an arrow **Y.** A guide bar **56** is connected to the supporting posts **54** and **55**, which extends across the table **53** along a direction perpendicular to the direction indicated by the arrow **Y**.

The guide bar **56** is provided with a scribing portion **57**, which scribes a mother glass substrate **5** placed on the table **53**, in a manner such that the scribing portion **57** is freely reciprocated along a direction perpendicular to a direction indicated by an arrow **Y**. On the guide bar **56**, a guide groove is formed along the direction perpendicular to the direction indicated by the arrow **Y**. The scribing portion **57** has a holder support **65** which is provided in a manner such that the holder support **65** freely slids along the guide groove formed on the guide bar **56**. The holder support 65 is driven by a motor (not shown) along the direction perpendicular to the direction indicated by the arrow **Y**. A scribing head **66** is provided on a surface of the holder support **65** opposite to the guide bar **56**. A chip holder **68** is provided on a lower surface of the scribing head **66**. The chip holder **68** supports a cutter wheel chip **58** at a lower end in a manner such that the cutter wheel chip **58** is freely rotated.

The rail **51** and the rail **52** are respectively provided with a linear motor **59** and a linear motor **60** which cause the supporting post **54** and the supporting post **55** to reciprocate along the direction indicated by the arrow **Y**. A first driver **61** which generates a position control signal for position-controlling the linear motor **59**, is connected to the linear motor **59**. A second driver **62** which torque-controls the linear motor **60** based on the position control signal generated by the first driver **61**, is connected to the linear motor **60**.

The glass scriber **2** is provided with a sensor **63** which detects a position of the supporting post **54** driven by the linear motor **59**. A controller **64** which controls the first driver **61** based on the position of the supporting post **54** detected by the sensor **63**, is connected to the first driver 61.

In the glass scriber **2** having the above-described configuration, when the controller **64** outputs a control signal to the first driver **61** based on the position of the supporting post **54** detected by the sensor **63**, the first driver **61** generates a position control signal for position-controlling the linear motor **59** based on the control signal output by the controller **64**, and outputs the position control signal to the linear motor **59** and the second driver **62**. The linear motor **59** is driven to position-control the supporting post **54** based on the position control signal output by the first driver **61**. The second driver **62** is driven to torque-control the linear motor **60** based on the position control signal output by the first driver **61**. The supporting post **54** which is driven by the linear motor **59** position-controlled by the first driver **61**, is moved along the rail **51**. The supporting post **55** which is driven by the linear motor **60** torque-controlled by the second driver **62**, is moved along the rail **52** to follow the supporting post **54**.

After the supporting post **54** and the supporting post **55** are moved to their respective predetermined positions in the above-described manner, the holder support **65** provided in a manner such that it freely slides along the guide groove formed on the guide bar **56,** is driven by a motor (not shown) to be moved along the direction perpendicular to the direction indicated by the arrow **Y.** The cutter wheel chip **58** rotatably supported by the chip holder **68** attached to the lower surface of the scribing head **66** provided on the holder support **65**, is pressed against and rolled on the mother glass substrate **5** placed on the table **53**, so that a scribed line is formed along the direction perpendicular to the direction indicated by the arrow **Y**.

As described above, according to Comparative example 2, the first driver **61** generates a position control signal for position-controlling the linear motor **59** and outputs it to the linear motor **59**. The second driver **62** torque-controls the linear motor **60** based on a position control signal generated by the first driver **61**. Therefore, when the supporting post **54** driven by the linear motor **59** is moved, the supporting post **55** driven by the linear motor **60** is moved to follow the supporting post **54.** Therefore, the supporting post **54** and the supporting post **55** can be moved smoothly.

It should be noted that an example applied to a glass scriber which scribes a mother glass substrate using a cutter wheel chip has been illustrated. As the cutter wheel chip 58 of Comparative example 2, a cutter wheel chip disclosed in commonly-assigned Japanese Patent No. 3074143 is preferably used. The cutter wheel chip has a blade edge which is formed at a ridgeline portion of the disk-like wheel with a plurality of groove portions being formed at a predetermined pitch. By using such a cutter wheel chip, a vertical crack can be easily formed along the thickness direction of the mother glass substrate **5**.

Therefore, of the scribing step and the breaking step which are conventionally required for scribing and breaking a mother glass substrate, the breaking step can be eliminated.

It should be noted that the above-described cutter wheel chip having a plurality of groove portions formed at the ridgeline portion of the disk-like wheel may not be used. Alternatively, a cutter wheel chip may be vibrated to periodically vary the pressing force of the cutter wheel chip against the mother glass substrate **5**, thereby scribing the mother glass substrate **5**. Also in this case, a vertical crack can be easily formed along the thickness direction of the mother glass substrate **5**.

By using this scribing method, the breaking step can be eliminated of the scribing step and the breaking step which are conventionally required for scribing and breaking a mother glass substrate.

In addition, the cutter wheel chip 58 of Comparative example 2 may be elevated or lowered by the rotation of a servo motor, so that the rotational torque of the servo motor may be transferred to the cutter wheel chip **58** and the scribing pressure of the cutter wheel chip **58** to the glass substrate may be changed. By elevating and lowering the cutter wheel chip **58** by the rotation of the servo motor, the elevating/lowering mechanism for the cutter wheel chip **58** can be simplified, resulting in an increase in economy. In addition, the position (0-point position) of a glass substrate at which the cutter wheel chip **58** contacts it, can be detected based on the rotation of the servo motor. Therefore, a mechanical mechanism for detecting such a position is unnecessary. In addition, since the scribing pressure can be easily changed with high precision by the rotation of the servo motor, thereby making it possible to easily support the kinds, shapes, and the like of a glass substrate.

It should be noted that, in this case, alternatively, the cutter wheel chip **58** may be elevated and lowered by using gears to convert the rotational movement of the servo motor to upward and downward movement.

In addition, when scribing, the cutter wheel chip **58** may be elevated and lowered by rotating the servo motor by position control, and a rotational torque which acts to return the cutter wheel chip **58** to a position set by the servo motor when the cutter wheel chip **58** is not positioned at the set position, may be controlled and may be transferred as scribing pressure to the cutter wheel chip **58.** In this case, the cutter wheel chip **58** is preferably designed in a manner such that the position of the cutter wheel chip **58** is lowered by a predetermined amount from the upper surface of the glass substrate at substantially the same time as the start of scribing.

Thus, in the case where the position of the cutter wheel chip **58** along an upward direction and a downward direction is controlled by the servo motor when scribing, the scribing pressure of the cutter wheel chip **58** may be temporarily enhanced upon scribing across a scribed line which has already been formed. Alternatively, when the cutter wheel chip **58** is moved on a glass substrate, the rotational torque of the servo motor may be controlled to be a previously set limited value. In either case, even when a scribing trace swells the glass substrate as a result of forming the scribed line, it is possible to prevent the cutter wheel chip **58** from jumping when traveling across the scribed line.

The present Comparative example can be applied to a glass scriber which uses a laser oscillator outputting a laser beam to scribe a mother glass substrate (e.g., a method disclosed in Japanese Patent No. 3027768 is used for scribing). In addition, when a grindstone is attached to a guide bar, the guide bar can obtain a function as a glass substrate polishing apparatus for polishing a glass substrate constituting liquid crystal panels.

### (Comparative example 3)

A glass substrate polishing apparatus according to Embodiment 3 does not require changing of suction tables.

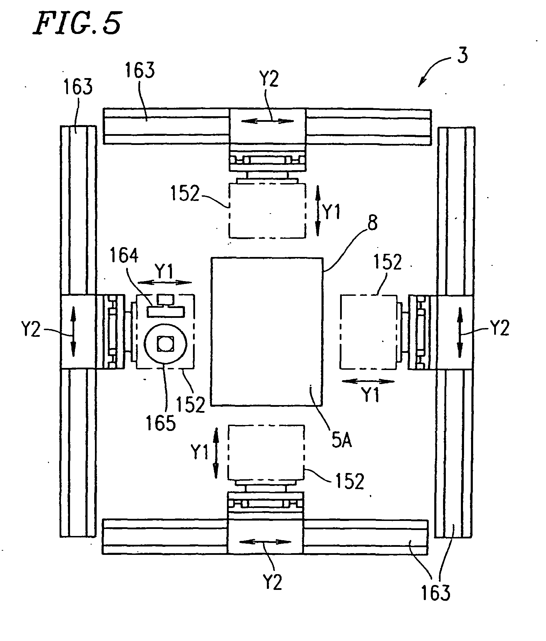

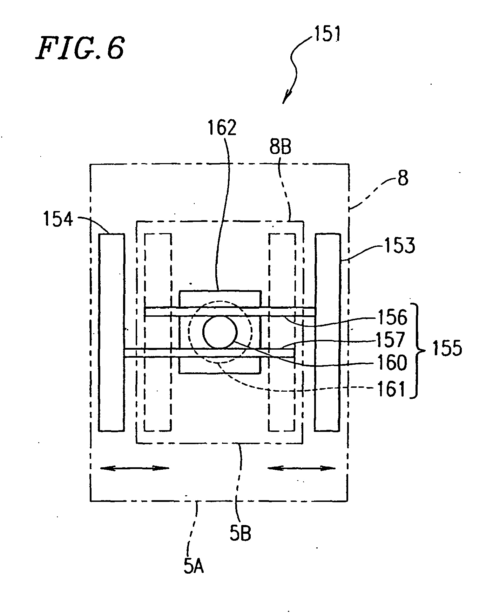

Figure **5** is a plan view of a glass substrate polishing apparatus 3 according to Comparative example 3. Figure 6 is a plan view of a polishing table provided in the glass substrate polishing apparatus **3**. The glass substrate polishing apparatus **3** comprises a polishing table **151** on which a glass substrate **5A** constituting liquid crystal panels is to be placed (see Figure **6**). The glass substrate polishing apparatus **3** is provided with four polishing machines **152** which polish four side edges **8** of the glass substrate **5A** placed on the polishing table **151**, respectively. Each polishing machine **152** is provided in a manner such that it freely slides along a guide rail **163** provided in parallel to each side edge **8.** The glass substrate polishing apparatus **3** comprises a servo motor and a ball screw (not shown) which are provided to cause each polishing machine **152** to slide along the guide rail **163**. Each polishing machine **152** is provided in a manner such that it can be moved along a direction indicated by an arrow **Y1** to abut the corresponding side edge **8.** The glass substrate polishing apparatus **3** comprises a polishing machine moving mechanism (not shown) which is provided so as to cause each polishing machine **152** to move in the direction indicated by the arrow **Y1.**

Each polishing machine **152** comprises a vertical grinder **164** which is rotated around an axis parallel to the side edge **8** of the glass substrate **5A** which faces the polishing machine **152**. The vertical grinder **164** polishes an end face of the glass substrate **5A**. Each polishing machine **152** comprises a horizontal grinder **165** which is rotated around an axis perpendicular to the side edge of the glass substrate **5A** which faces the polishing machine **152**. The horizontal grinder **165** polishes an upper edge and a lower edge of an end face of the glass substrate **5A.**

As shown in Figure **6****,** the polishing table **151** is provided with a sub-table **153** and a sub-table **154** which suction and fix the glass substrate **5A** along a pair of side edges **8** of the glass substrate **5A**, the side edges **8** opposing each other, and which are disposed in parallel to each other and spaced with an appropriate interval. The polishing table **151** comprises amain table **162**. The main table **162** is provided with an adjustment mechanism **155** which adjusts the interval between the sub-table **153** and the sub-table **154,** depending on a size of a glass substrate. The adjustment mechanism **155** comprises a rack member **156** and a rack member **157** which are disposed along a direction perpendicular to the pair of side edges **8** and in parallel to each other. The rack member **156** and the rack member **157** are coupled with the sub-tables **153** and **154,** respectively, with a bolt member or the like (not shown). A pinion **160** which is engaged with the rack member **156** and the rack member **157**, are provided between the rack member **156** and the rack member **157**. A motor **161** which rotates the pinion **160** is connected to the pinion **160**.

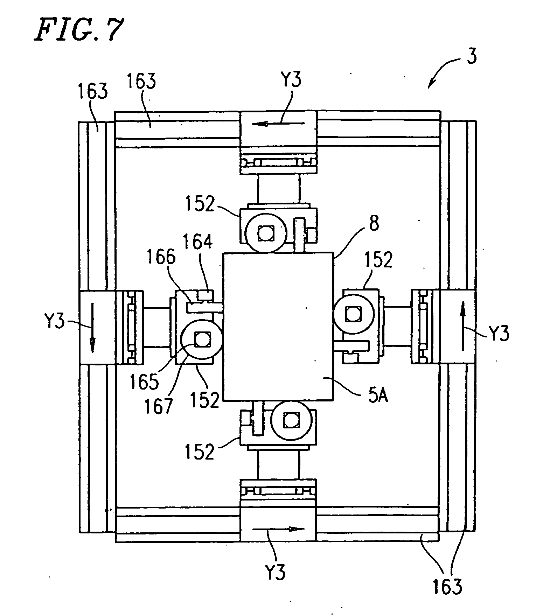

An operation of the glass substrate polishing apparatus **3** having the above-described configuration will be described. Figure **7** is a plan view explaining the operation of the glass substrate polishing apparatus **3**. When the glass substrate **5A** having a predetermined size is suctioned and fixed to the sub-tables **153** and **154** along the pair of side edges **8,** the vertical grinder **164** and the horizontal grinder **165** of each polishing machine **152** is rotated. Thereby, each polishing machine **152** is moved by a distance of a predetermined feed amount plus a predetermined polish amount along a direction indicated by the arrow **Y1,** so that the vertical grinder **164** and the horizontal grinder **165** contact the corresponding side edges **8** of the glass substrate **5A**. In this state, each polishing machine **152** is simultaneously moved along a direction indicated by an arrow **Y3**, an edge of the end face of each side edge **8** of the glass substrate **5A** is polished with the horizontal grinder **165** of the corresponding polishing machine **152**, and then the end face of each side edge **8** is polished with the vertical grinder **164**. After such a polish is completed, each polishing machine **152** is moved to a stand-by position of Figure **5**. Thereafter, the sub-tables **153** and **154** stop suctioning the glass substrate provided on the polishing table **151**. The glass substrate **5A** which has been completely polished, is removed from the sub-tables **153** and **154** using a suctioning transport mechanism or the like (not shown).

When polishing a glass substrate **5B** which has a size smaller that the predetermined size of the glass substrate **5A**, the motor **161** connected to the pinion **160** is rotated in such a manner that the pinion **160** is rotated counterclockwise. When the pinion **160** is rotated counterclockwise, the rack member **156** engaged with the pinion **160** is moved in a leftward direction in Figure **6**. The sub-table **153** connected to the rack member **156** is translated in the leftward direction in Figure **6**. The rack member **157** which is engaged with the pinion **160** on a side of the pinion **160** opposite to the rack member **156**, is moved in a rightward direction in Figure **6**. The sub-table **154** connected to the rack member **157** is translated in the rightward direction in Figure **6**. Thus, when the pinion **160** is rotated counterclockwise, the sub-table **153** is translated in the leftward direction in Figure **6** and the sub-table **154** is translated in the rightward direction in Figure **6**. As a result, the interval between the sub-table **153** and the sub-table **154** becomes narrow. Further, the pinion **160** is rotated counterclockwise, and the sub-table **153** and the sub-table **154** is moved to positions indicated by dashed lines in Figure **6** such that the substrate **5B** can be fixed along a pair of side edges **8B** facing each other of the glass substrate **5B** having a size smaller than that of the glass substrate **5A.** Then, the rotation of the motor **161** connected to the pinion **160** is stopped.

Thereafter, the glass substrate **5B** having a size smaller than that of the glass substrate **5A** is placed on the sub-table **153** and the sub-table **154** by the suctioning transport mechanism (not shown). Next, the sub-table **153** and the sub-table **154** suction and fix the placed glass substrate **5B.** Thereafter, each polishing machine **152** polishes the side edge **8B** of the glass substrate **5B** suctioned and fixed by the sub-table **153** and the sub-table **154** as described above.

When polishing a glass substrate having a size larger than that of the glass substrate **5A,** the motor **161** connected to the pinion **160** is rotated in a manner such that the pinion **160** is rotated clockwise.

As described above, according to Comparative example 3, the adjustment mechanism **155** adjusts the interval between the sub-table **153** and the sub-table **154,** depending on the size of a glass substrate which is suctioned and fixed to the sub-table **153** and the sub-table **154**. Therefore, it is possible to reduce the number of steps for changeover in which every time the size of a glass substrate to be polished is changed, a polishing table is exchanged with one which has a size suitable for the changed glass substrate.

### (Comparative example 4)

A glass scriber according to Comparative example 4 reduces a tact time of the step of scribing a mother glass substrate.

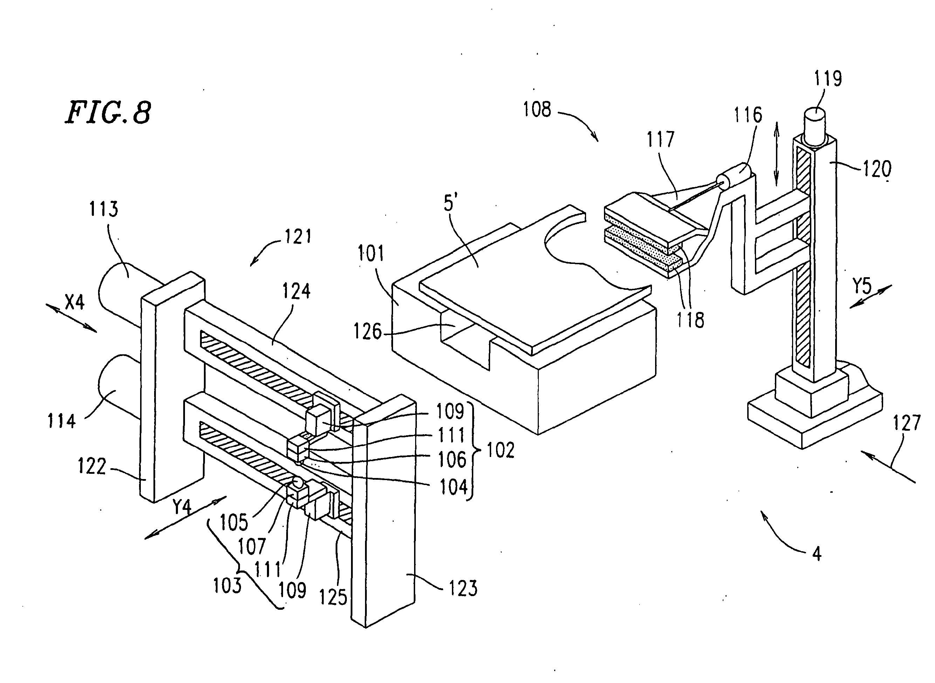

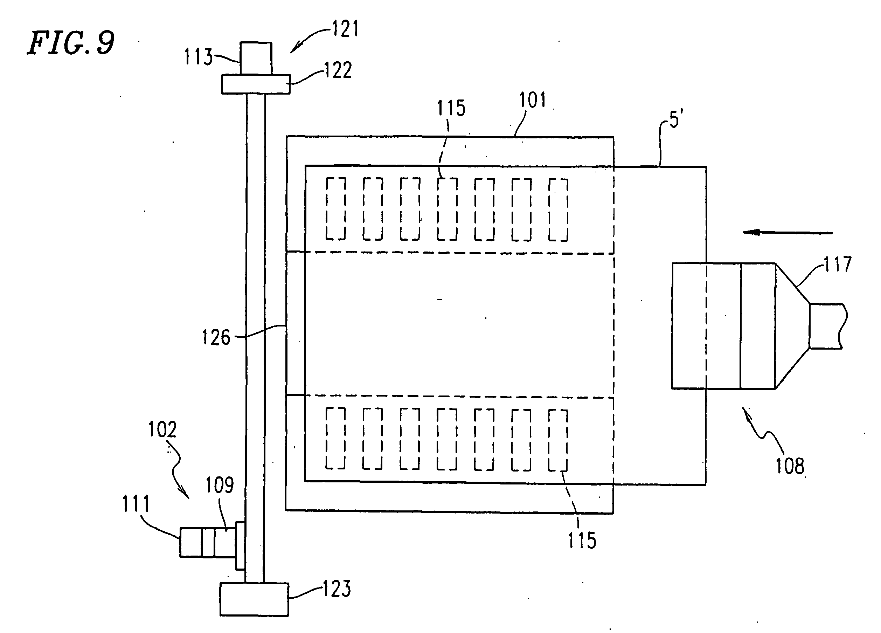

Figure **8** is a perspective view of the glass scriber 4 of Comparative example 4, and Figure 9 is a plan view explaining a major portion of the glass scriber **4.** The glass scriber **4** comprises a table **101** in substantially the shape of a rectangle. A mother glass substrate **5'** is placed on an upper surface of the table **101** in a manner such that an end of the mother glass substrate **5'** juts out from the upper surface of the table **101**.

The glass scriber **4** comprises a holding transport mechanism **108**. The holding transport mechanism **108** holds (as if it grasps) an end of the mother glass substrate **5',** which juts out from the upper surface of the table **101,** and causes the mother glass substrate **5'** to slide on the upper surface of the table **101** to transport the mother glass substrate **5'** on the upper surface of the table **101**. The holding transport mechanism **108** is provided with a capturing device **117** in substantially the shape of a character **Y** viewed in a direction indicated by an arrow **127** in Figure **8**. The capturing device **117** is configured to open/close freely by the operation of a cylinder **116,** and holds an end of the mother glass substrate **5'** which juts out from the upper surface of the table **101.** The capturing device **117** is provided with a pair of mats **118**, which are attached to portions of the capturing device **117** which contact the opposite surfaces of the held mother glass substrate **5.** The holding transport mechanism **108** comprises a supporting post **120** which supports the capturing device **117** in a manner such that the capturing device **117** is freely moved upward and downward. A motor 119 for moving the capturing device 117 upward and downward is provided on the supporting post **120.** The supporting post **120** is provided in a manner such that the supporting post **120** is freely moved back and forth by a motor (not shown) along a direction indicated by an arrow **Y5.**

The table **101** has a capturing device guide groove **126** which is formed along a direction in which the capturing device **117** pushes the mother glass substrate **5'**, so that the capturing device **117** can enter to slide the mother glass substrate **5'** while holding the mother glass substrate **5'.** On each of the opposite surfaces of the capturing device guide groove **126,** a plurality of rollers **115** on which the mother glass substrate **5'** is to be placed, are provided along a direction in which the capturing device **117** slides the mother glass substrate **5'**.

A scribing mechanism **121** for scribing the mother glass substrate **5'** is provided on a side of the table **101** opposite to the holding transport mechanism **108**. The scribing mechanism **121** comprises a pair of supporting posts **122** and **123**. Guide bars **124** and **125** are connected to the pair of supporting posts **122** and **123.** The guide bars **124** and **125** sandwiches the mother glass substrate **5',** which has been transported by the holding transport mechanism **108,** from a front surface and a rear surface thereof. Another end of the mother glass substrate **5'** juts out from the table 101.

The guide bar **124** is provided with a scribing portion **102** for scribing the front surface of the mother glass substrate **5'** in a manner such that the scribing portion **102** freely slides along a direction indicated by an arrow **X4.** The guide bar **125** is provided with a scribing portion **103** for scribing the rear surface of the mother glass substrate **5'** in a manner such that the scribing portion **103** faces the scribing portion **102** and the scribing portion **103** freely slides along the direction indicated by the arrow **X4.** Motors **113** and **114** for causing the scribing portions **102** and **103** to slide along the direction indicated by the arrow **X4,** are attached to the supporting post **122.**

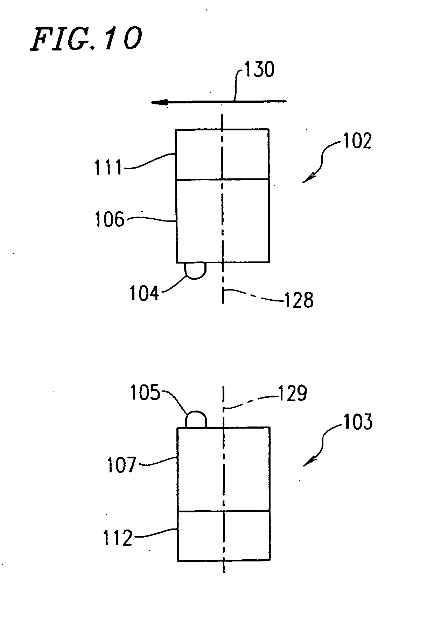

Figure **10** is a front view explaining a first cutter wheel chip and a second cutter wheel chip provided on the scribing portions **102** and **103,** respectively. Referring to Figures **8** and **10****,** the scribing portion **102** has a moving member **109** which is provided in a manner such that it freely slides along the direction indicated by the arrow **X4.** A scribing head **111** is provided on a lower surface of the moving member **109** in a manner such that the scribing head **111** protrudes toward a side of the guide bar **124** opposite to the table **101**. A chip holder **106** is provided on a lower surface of the scribing head **111**. A first cutter wheel chip **104** is provided on a lower surface of the chip holder **106**.

The scribing portion **103** has the same configuration as that of the above-described scribing portion **102**, and is provided in a manner such that it faces the scribing portion **102**. The scribing portion **103** has a moving member **109** which is provided in a manner such that it freely slides along the direction indicated by the arrow **X4.** A scribing head **111** is provided on an upper surface of the moving member **109** in a manner such that the scribing head **111** protrudes toward a side of the guide bar **125** opposite to the table **101.** A chip holder **107** is provided on an upper surface of the scribing head **111**. A second cutter wheel chip **105** is provided on an upper surface of the chip holder **107**.

The first cutter wheel chip **104** provided on the scribing portion **102** is attached thereto, eccentrically departing from a rotational center **128** of the chip holder **106** toward a direction indicated by an arrow **130**. The second cutter wheel chip **105** provided on the scribing portion **103** is attached thereto, eccentrically departing from a rotational center **129** of the chip holder **107** toward a direction indicated by an arrow **130.**

Depending on the type of the mother glass substrate **5'** to be scribed and broken, the blade edge of the first cutter wheel chip **104** provided in the scribing portion **102** may be different from the blade edge of the second cutter wheel chip **105** of the scribing portion **103.** Therefore, different types of a bonded mother glass substrate **5'** to be scribed and broken can be flexibly supported.

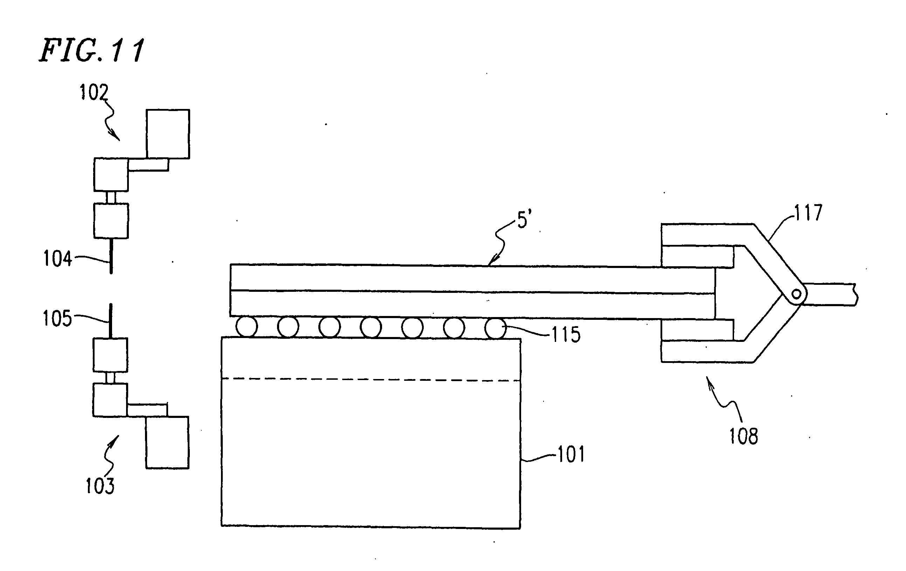

An operation of the glass scriber **4** having the above-described configuration will be described. Figures **11** to **14** are diagrams for explaining a scribing operation of the glass scriber **4**. When the bonded mother glass substrate **5'** is placed on the table **101** by a suctioning transport mechanism (not shown) in a manner such that an end of the bonded mother glass substrate **5'** juts out from a side of the scribing mechanism **121** opposite to the table **101**, the capturing device **117** provided in the holding transport mechanism **108** holds (as if it grasps) the end of the bonded mother glass substrate **5'** jutting out from the table **101** as shown in Figure **11****.** Thereafter, the supporting post **120** provided in the holding transport mechanism **108** is moved along the direction indicated by the arrow **Y5** toward the scribing mechanism **121**, and the capturing device **117** attached to the supporting post **120** causes the held bonded mother glass substrate **5'** to slide. The bonded mother glass substrate **5'** is transported toward the scribing mechanism **121** in a manner such that the bonded mother glass substrate **5'** is rolled on a plurality of rollers **115** provided on the table **101.** The bonded mother glass substrate **5'** is transported so that predetermined scribing lines previously designed on the bonded mother glass substrate **5'** are positioned corresponding to the first cutter wheel chip **104** and the second cutter wheel chip **105** of the scribing portions **102** and **103** provided in the scribing mechanism **121**, and then the movement of the supporting post **120** is stopped.

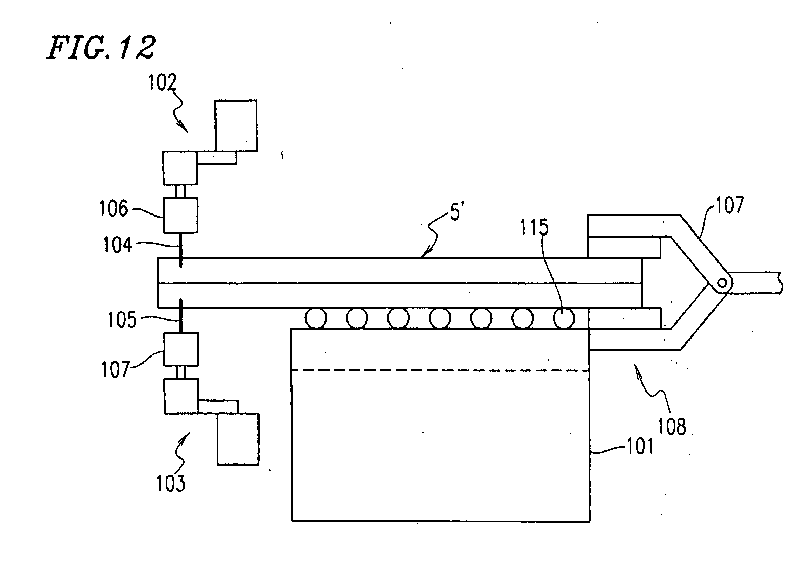

Next, the motor **113** provided on the supporting post **122** of the scribing mechanism **121**, drives the scribing portion **102** along the guide bar **124**. As shown in Figure **12**, the first cutter wheel chip **104** attached to the chip holder **106** provided in the scribing portion **102** scribes the upper side glass substrate of the bonded mother glass substrate **5** along a predetermined scribing line from above. The motor **114** drives the scribing portion **103** along the guide bar **125**. As shown in Figure **12**, the second cutter wheel chip **105** attached to the chip holder **107** provided in the scribing portion **103** scribes the lower side glass substrate of the bonded mother glass substrate **5'** along the predetermined scribing line from below.

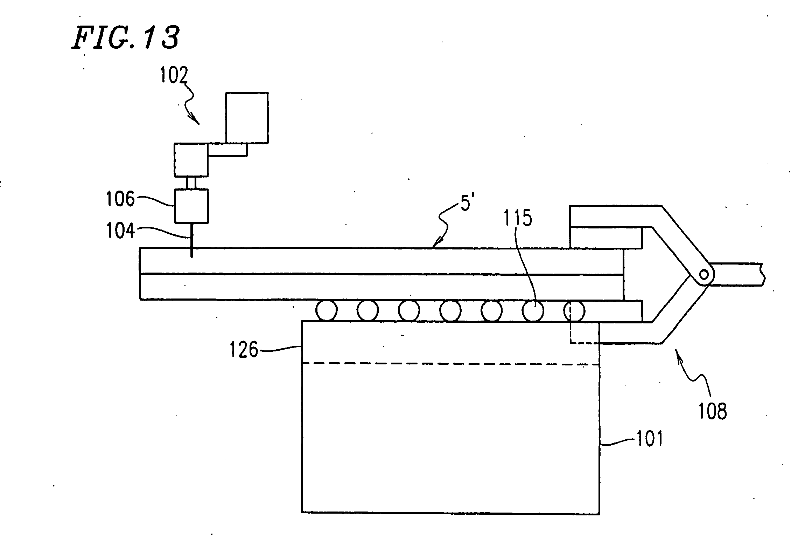

Thereafter, the supporting post **120** provided in the holding transport mechanism **108** is further moved along the direction indicated by the arrow **Y5** toward the scribing mechanism **121**. The capturing device **117** attached to the supporting post **120** slides the held bonded mother glass substrate **5'** and enters the capturing device guide groove **126** provided in the table **101** as shown in Figure **13**. The bonded mother glass substrate **5'** is further transferred on the plurality of rollers **115** provided on the upper surface of the table **101.** The bonded mother glass substrate **5'** is further transferred so that another predetermined scribing line of the bonded mother glass substrate **5'** is positioned corresponding to the first cutter wheel chip **104** of the scribing portion **102**. Then, the movement of the supporting post **120** is stopped again.

Thereafter, the motor **113** provided on the supporting post **122** of the scribing mechanism **121**, drives the scribing portion **102** along the guide bar **124**, and the first cutter wheel chip **104** attached to the chip holder **106**, scribes the upper side glass substrate of the bonded mother glass substrate **5'** along another predetermined scribing line as shown in Figure **13**.

Thereafter, the supporting post **120** provided in the holding transport mechanism **108** is further moved along the direction indicated by the arrow **Y5** toward the scribing mechanism **121**. The capturing device **117** attached to the supporting post **120** further slides the held bonded mother glass substrate **5'**. The bonded mother glass substrate **5'** is transferred so that still other predetermined scribing lines on the upper and lower glass substrates of the bonded mother glass substrate **5'** are positioned corresponding to the first cutter wheel chip **104** and the second cutter wheel chip **105** of the scribing portions **102** and **103**. The, the movement of the supporting post **120** is stopped again.

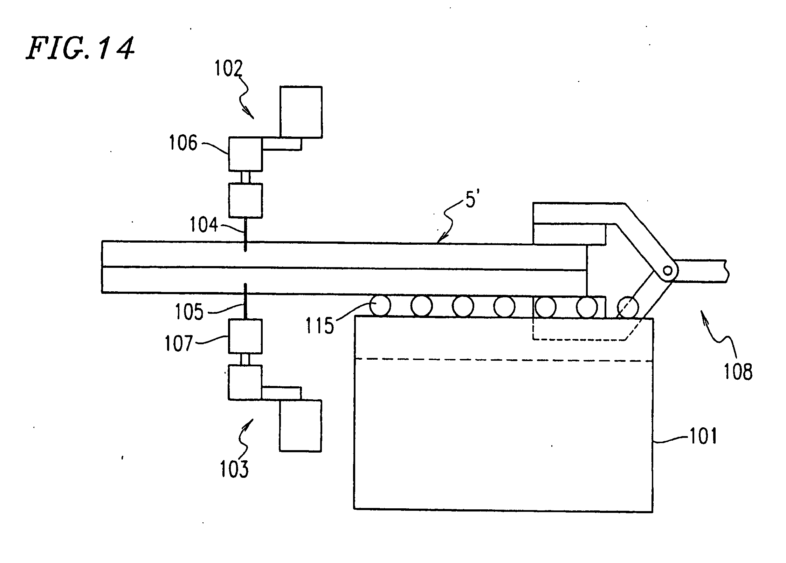

Next, the motor **113** drives the scribing portion **102** along the guide bar **124** as described above with reference to Figure **12**, while the first cutter wheel chip **104** scribes the upper side glass substrate of the bonded mother glass substrate **5'** along the predetermined scribing line as shown in Figure **14****.** The motor **114** drives the scribing portion **103** along the guide bar **125,** while second cutter wheel chip **105** scribes the lower side glass substrate of the bonded mother glass substrate **5'** along the predetermined scribing line as shown in Figure **14****.**

As described above, according to Comparative example 4, the holding transport mechanism **108** holds and transfers the bonded mother glass substrate **5'** so that the predetermined scribing lines of the upper and lower glass substrates of the bonded mother glass substrate **5'** are positioned corresponding to the first and second cutter wheel chips. While the bonded mother glass substrate **5'** is held, the bonded mother glass substrate **5'** is scribed along the predetermined scribing line. Thereafter, the bonded mother glass substrate **5'** is successively transferred so that other predetermined scribing lines are positioned corresponding to the first and second cutter wheel chips.

Therefore, the holding transport mechanism **108** continues to hold the bonded mother glass substrate **5'** before and after the cutter wheel chips have scribed the respective upper and lower glass substrates of the bonded mother glass substrate **5'.** Therefore, before and after each cutter wheel chip scribes the bonded mother glass substrate **5'**, an operation of releasing the mother glass substrate **5** and an operation of holding the mother glass substrate **5** again become unnecessary. As a result, it is possible to reduce the tact time of the step of scribing the mother glass substrate **5.**

In the glass scriber 4 of Comparative example 4, a cutterwheel chip disclosed in commonly-assigned Japanese Patent No. 3074143 can be used as the first cutter wheel chip **104** and the second cutter wheel chip **105**.

The cutter wheel chip has a blade edge which is formed at a ridgeline portion of the disk-like wheel with a plurality of groove portions being formed at a predetermined pitch. By using such a cutter wheel chip, a vertical crack can be easily formed along the thickness direction of the upper and lower side glass substrates of the mother glass substrate **5'**.

Therefore, of the scribing step, the substrate inverting step, and the breaking step which are conventionally required for scribing and breaking a mother glass substrate, the substrate inverting step and the breaking step can be eliminated.

Such a cutter wheel chip may not be used. Alternatively, the first cutter wheel chip **104** and the second cutter wheel chip **105** may be vibrated to periodically vary the pressing force of the first cutter wheel chip **104** and the second cutter wheel chip **105** against a mother glass substrate, thereby scribing the mother glass substrate.

When such a scribing method is used, the first cutter wheel chip **104** and the second cutter wheel chip **105** may be elevated or lowered by the rotation of a servo motor, so that the rotational torque of the servo motor may be transferred to the first cutter wheel chip **104** and the second cutter wheel chip **105,** and the scribing pressure of the first cutter wheel chip **104** and the second cutter wheel chip **105** onto the bonded mother glass substrate **5'** may be changed, as described in Embodiment 1.

In this case, by elevating and lowering the first cutter wheel chip **104** and the second cutter wheel chip **105** by the rotation of the servo motor when scribing, a rotational torque which acts to return the first cutter wheel chip **104** and the second cutter wheel chip **105** to a position set by the servo motor when the first cutter wheel chip **104** and the second cutter wheel chip **105** are not positioned at the set positions, may be controlled and may be transferred as scribing pressure to the first cutter wheel chip **104** and the second cutter wheel chip **105**.

Further, a CCD camera which picks up an image of an alignment mark provided on the bonded mother glass substrate **5'** immediately before scribing the bonded mother glass substrate **5',** and a monitor which displays the image picked up by the CCD camera, are provided. The CCD camera and the monitor are utilized to calculate a gradient and a shift amount of the bonded mother glass substrate **5'** with respect to a predetermined scribing line designed on the bonded mother glass substrate **5'**.

The image picked up by the CCD camera is processed. As a result of the processing, the bonded mother glass substrate **5'** which has been slid and set on the table **101** may be rotated around an axis perpendicular to the table **101**, i. e. , a predetermined scribing line on the bonded mother glass substrate **5'** may be inclined with respect to the movement direction (scribed line) of the first cutter wheel chip **104** and the second cutter wheel chip **105.** In this case, the first cutter wheel chip **104** and the second cutter wheel chip **105** are moved by linear interpolation to scribe. Linear interpolation is performed by calculating the scribing start positions of the first cutter wheel chip **104** and the second cutter wheel chip **105,** and moving the cutter wheel chips **104** and **105** in the **X4** and **Y4** directions to scribe in a manner such that a difference between an actual scribed line obtained from the calculated scribe start position and a predetermined scribing line is eliminated.

The image processing utilizing a CCD camera and a monitor is preferably performed every time the bonded mother glass substrate **5'** is scribed. However, when high precision is not required for separating the bonded mother glass substrate **5'** or when positioning of the bonded mother glass substrate **5'** with respect to the table **101** is performed with high precision, image processing may be performed only when the bonded mother glass substrate **5'** is first scribed.

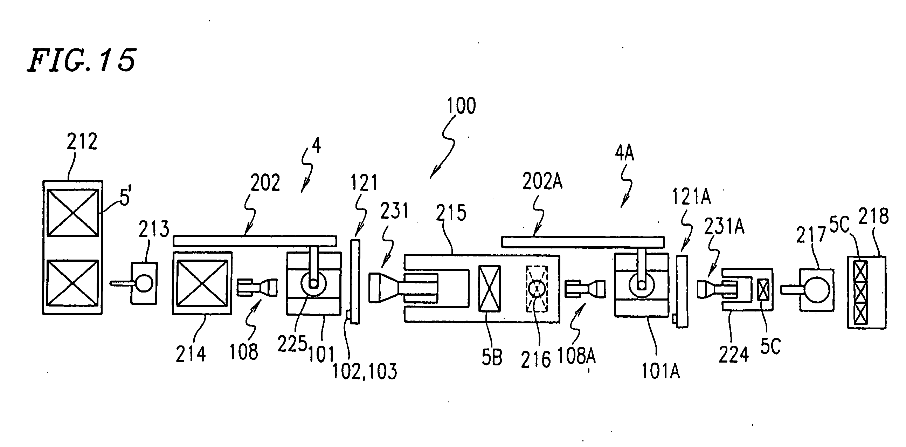

Figure **15** is a diagram showing a configuration of a liquid crystal panel scribing and breaking line **100** using the glass scriber 4 of Comparative example 4. The liquid crystal panel scribing and breaking line **100** comprises a loader **212** which stocks bonded mother glass substrates **5'**. The liquid crystal panel scribing and breaking line **100** is provided with a feeding robot **213.** The feeding robot **213** suctions one by one the bonded mother glass substrates **5'** stocked in the loader **212,** and places it on a table **214.**

The liquid crystal panel scribing and breaking line **100** is provided with a suctioning transport mechanism **202**. The suctioning transport mechanism **202** suctions the bonded mother glass substrate **5'** placed on the table **214**, and feeds it to the glass scriber **4**.

The liquid crystal panel scribing and breaking line **100** comprises a holding transport mechanism **231**. The holding transport mechanism **231** holds a row segment of the bonded mother glass substrate **5B** obtained by separation using the glass scriber **4,** and places it on a conveyer **215.** The conveyer **215** transports the row segment of mother glass substrate **5B** placed on the holding transport mechanism **231** to a downstream positioning site where the mother glass substrate **5B** is positioned. The conveyer **215** is provided with a rotating table **216.** The rotating table **216** is used to rotate the bonded mother glass substrate **5B** positioned at the positioning site by 90 degrees.

The liquid crystal panel scribing and breaking line **100** is provided with a suctioning transport mechanism **202A.** The suctioning transport mechanism **202A** suctions the row segment of the bonded mother glass substrate **5B** placed on the rotating table **216,** and feeds it to a glass scriber **4A**. The glass scriber **4A** has the same configuration as the glass scriber **4,** except that the glass scriber **4A** has a narrower widthwise dimension than that of the glass scriber **4.** Therefore, the detail description of the configuration of the glass scriber **4A** is omitted. The glass scriber **4A** scribes and breaks the mother glass substrate **5B** fed by the suctioning transport mechanism **202A** into liquid crystal panels **5C.** The liquid crystal panel scribing and breaking line **100** comprises a holding transport mechanism **231A.** The holding transport mechanism **231A** holds the liquid crystal panel **5C** separated by the glass scriber **4A,** and places it on the conveyer **224.** The liquid crystal panel **5C** placed on the conveyer **224** by the holding transport mechanism **231A** is transferred to a downstream site by the conveyer **224,** and is transferred by a removing robot **217** to a product stock **218.**

An operation of the liquid crystal panel scribing and breaking line **100** having the above-described configuration will be described. The feeding robot **213** suctions one by one the bonded mother glass substrates **5'** stocked in the loader **212**, and places it on the table **214**.

The suctioning transport mechanism **202** suctions the bonded mother glass substrate **5'** placed on the table **214,** and feeds it to the glass scriber **4.** The glass scriber **4** simultaneously scribes both the upper and lower side glass substrates of the bonded mother glass substrate **5'** fed by the suctioning transport mechanism **202** to separate a row segment of the bonded mother glass substrate **5B** from the bonded mother glass substrate **5'.** The holding transport mechanism **231** holds the row segment of the bonded mother glass substrate **5B** separated by the glass scriber **4**, and places it on the conveyer **215**. The conveyer **215** transfers the row segment of mother glass substrate **5B** placed by the holding transport mechanism **231** to a downstream positioning site where the mother glass substrate **5B** is positioned. The rotating table **216** rotates, by 90 degrees, the row segment of the bonded mother glass substrate **5B** positioned at the positioning site.

The suctioning transport mechanism **202A** suctions the row segment of the bonded mother glass substrate **5B** placed on the rotating table **216** and feeds it to the glass scriber **4A**. The glass scriber **4A** simultaneously scribes the upper and lower glass substrate of the row segment of the bonded mother glass substrate **5B** fed by the suctioning transport mechanism **202A** to separate the row segment of the bonded mother glass substrate **5B** into liquid crystal panels **5C.** The holding transport mechanism **231A** holds the liquid crystal panel **5C** separated by the glass scriber **4A,** and places it on the conveyer **224**. The liquid crystal panel **5C** placed on the conveyer **224** by the holding transport mechanism **231A** is transferred by the conveyer **224** to a downstream site, and is transferred by the removing robot **217** to the product stock **218**.

According to the liquid crystal panel scribing and breaking line 100 using the glass scriber 4 of Comparative example 4, the glass scriber simultaneously scribes the upper and lower glass substrates of the bonded mother glass substrate **5'** to separate the bonded mother glass substrate **5'.** Therefore, it is possible to eliminate the inverting step of inverting a bonded mother glass substrate and the conventional breaking step. As a result, it is possible to reduce a tact time.

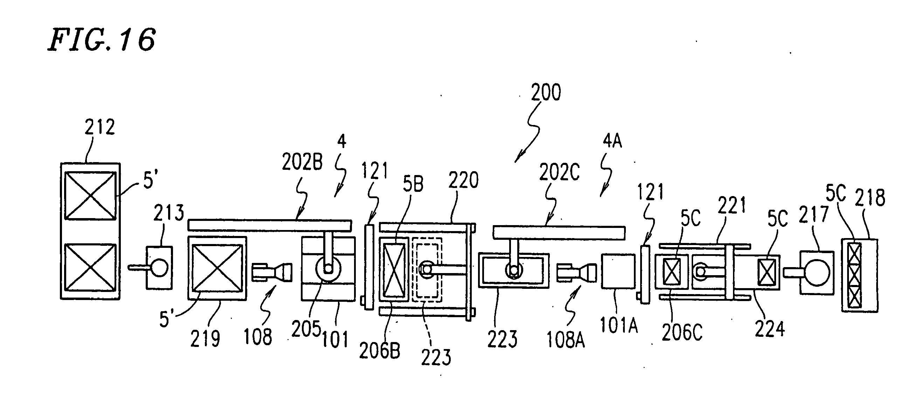

Figure **16** is a configuration diagram of another liquid crystal panel scribing and breaking line **200** using the glass scriber 4 of Comparative example 4. The same components as those which are shown in Figure **15** have the same reference numerals. The detailed description of these components is omitted.

The liquid crystal panel scribing and breaking line **200** comprises a loader **212** which stocks bonded mother glass substrates **5'.** The liquid crystal panel scribing and breaking line **200** is provided with a feeding robot **213.** The feeding robot **213** suctions one by one the bonded mother glass substrates **5'** stocked in the loader **212**, and places it on a table **219**.

The liquid crystal panel scribing and breaking line **200** is provided with a suctioning transport mechanism **202B.** The suctioning transport mechanism **202B** suctions the bonded mother glass substrate **5'** placed on the table **219,** and feeds it to the above-described glass scriber **4.**

The liquid crystal panel scribing and breaking line **200** is provided with a table **206B.** A row segment of the bonded mother glass substrate **5B** separated by the glass scriber **4** is placed on the table **206B.** The liquid crystal panel scribing and breaking line **200** comprises a suctioning transport portion **220**. The suctioning transport portion **220** suctions the mother glass substrate **5B** placed on the table **206B**, and transfers it to a transport table **223**. The transport table **223** on which the row segment of the bonded mother glass substrate **5B** placed by the suctioning transport portion **220** is rotated by 90 degrees, and transfers the row segment of the bonded mother glass substrate **5B** to a position adjacent to the glass scriber **4A.**

The glass scriber **4A** scribes and breaks the row segment of the bonded mother glass substrate **5B** transported by the transport table **223** into liquid crystal panels **5C.** The liquid crystal panel scribing and breaking line **200** is provided with a table **206C**. The liquid crystal panel **5C** separated by the glass scriber **4A** is placed on the table **206C**. The liquid crystal panel scribing and breaking line **200** comprises a suctioning transport portion **221**. The suctioning transport portion **221** suctions the liquid crystal panel **5C** placed on the table **206C,** and transfers it to the conveyer **224**.

The liquid crystal panel **5C** which has been transferred to the conveyer **224**, is transferred by the conveyer **224** to a downstream site where the liquid crystal panel **5C** is transferred by the removing robot **217** to a product stock **218.**

An operation of the liquid crystal panel scribing and breaking line **200** having the above-described configuration will be described. The feeding robot **213** suctions one by one the bonded mother glass substrates **5'** stocked in the loader **212,** and places it on the table **219.** The suctioning transport mechanism **202B** suctions the bonded mother glass substrate **5'** placed on the table **219,** and feeds it to the glass scriber **4**. The glass scriber **4** simultaneously scribes the upper and lower glass substrate of the bonded mother glass substrate **5'** fed by the suctioning transport mechanism **202B** to separate a row segment of the bonded mother glass substrate **5B** from the bonded mother glass substrate **5'.** The row segment of the bonded mother glass substrate **5B** separated is placed on the table **206B.** The suctioning transport portion **220** suctions the row segment of the bonded mother glass substrate **5B** placed on the table **206B,** and transfers it to the transport table **223.** The transport table **223** on which the row segment of the bonded mother glass substrate **5B** is placed by the suctioning transport portion **220** is rotated by 90 degrees, and transports the row segment of the bonded mother glass substrate **5B** to a position adjacent to the glass scriber **4A.**

The glass scriber **4A** simultaneously scribes the upper and lower glass substrates of the row segment of the bonded mother glass substrate **5B** transported by the transport table **223** to separate the row segment of the bonded mother glass substrate **5B** into liquid crystal panels **5C.** The separated liquid crystal panel **5C** is placed on the table **206C.** The suctioning transport portion **221** suctions the liquid crystal panel **5C** placed on the table **206C**, and transfers it to the conveyer **224**.

The liquid crystal panel **5C** transferred to the conveyer **224** is transferred by the conveyer **224** to a downstream site where the liquid crystal panel **5C** is transferred by the removing robot **217** to the product stock **218**.

As described above, according to the liquid crystal panel scribing and breaking line **200** using the glass scriber **4** of Embodiment **4**, it is possible to eliminate the inverting step of inverting a bonded mother glass substrate and the conventional breaking step, as in the liquid crystal panel scribing and breaking line **100**. As a result, it is possible to reduce a tact time.

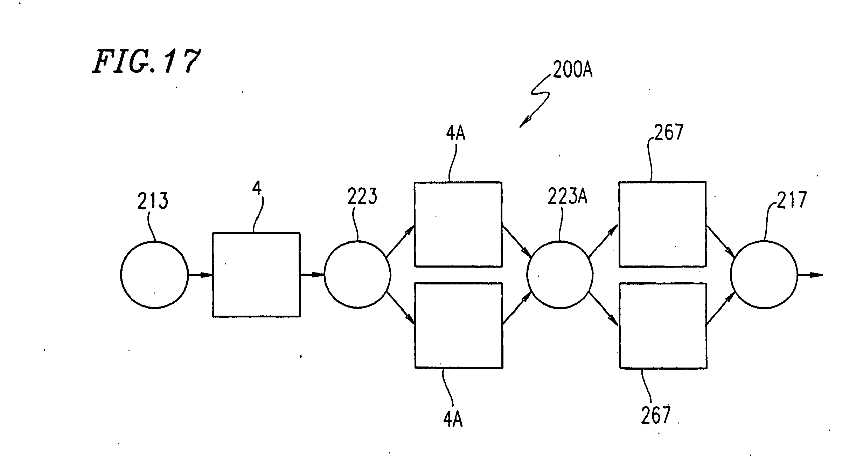

Figure **17** is a configuration diagram of another liquid crystal panel scribing and breaking line **200A** using the glass scribers **4** and **4A** of Comparative example **4**. The same components as those of the above-described liquid crystal panel scribing and breaking lines **100** and **200** have the same reference numerals. The detailed description of these components is omitted.

The liquid crystal panel scribing and breaking line **200A** comprises the glass scriber **4.** The glass scriber **4** scribes and breaks a bonded mother glass substrate **5'** fed by a feeding robot **213** into a row segment of the bonded mother glass substrate **5B,** and feeds it to a transport robot **223**. The transport robot **223** provides the row segment of the bonded mother glass substrate **5B** separated by the glass scriber **4** to two glass scribers **4A.** Each glass scriber **4A** scribes and breaks the row segment of the bonded mother glass substrate **5B** fed by the transport robot **223** into liquid crystal panels **5C**, and feeds them to a transport robot **223A**. The transport robot **223A** feeds the liquid crystal panel **5C** separated by each glass scriber **4A** to two chamfering apparatuses **267**. Each chamfering apparatus **267** chamfers an edge of each end face of the liquid crystal panel **5C** fed by the transport robot **223A**, and feeds it to a removing robot **217**. The removing robot **217** transfers the liquid crystal panel **5C**, the edge of each end face of which has been chamfered, to the next step.

When the glass scribers **4A** are arranged in parallel, a tact time is further improved. In addition, even when one of the glass scribers **4A** happens not to work, the scribing and breaking process can be continued by the other glass scriber **4A**.

It should be noted that the liquid crystal panel scribing and breaking line **200A** comprises glass scribers **4** and **4A,** and at least one glass substrate polishing apparatus **3.** In addition, the liquid crystal panel scribing and breaking line **200A** having the above-described configuration is applied only to a bonded mother substrate in which liquid crystal has already been sealed with a liquid crystal dropping method. In other words, the liquid crystal panel scribing and breaking line **200A** cannot be configured in the conventional production process of a liquid crystal panel requiring an injection step of injecting liquid crystal into the liquid crystal panel **5C.**

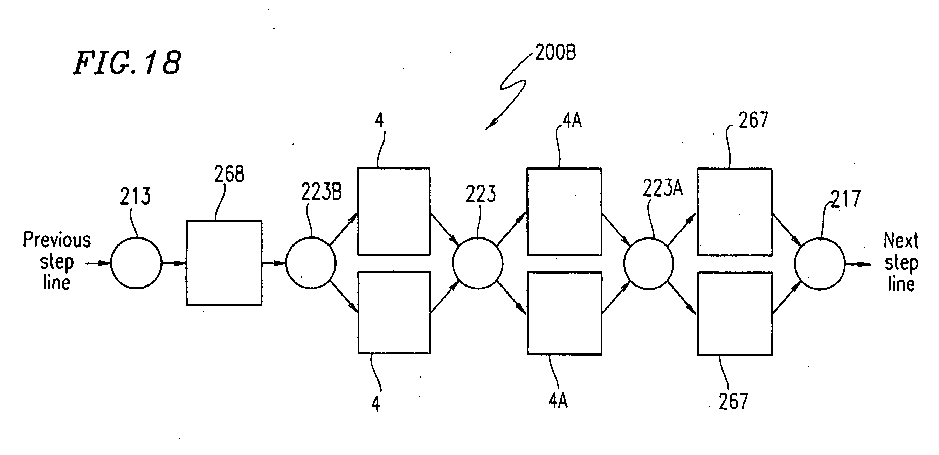

Figure **18** is a configuration diagram of still another liquid crystal panel scribing and breaking line **200B** using the glass scribers **4** and **4A** of Embodiment **4.** The same components as those of the liquid crystal panel scribing and breaking line **200A** which are described with reference to Figure **17** have the same references. The detailed description of these components is omitted. The liquid crystal panel scribing and breaking line **200B** is different from the liquid crystal panel scribing and breaking line **200A** in that two glass scribers **4** are arranged in parallel and that a feeding cassette **268** and a transport robot **223B** are provided.

When the glass scribers **4** are thus arranged in parallel, a tact time is further improved. In addition, even when one of the glass scribers **4** happens not to work, the scribing and breaking process can be continued by the other glass scriber **4**.

It should be noted that the liquid crystal panel scribing and breaking line **200B** comprises glass scribers **4** and **4A,** and at least one glass substrate polishing apparatus **3**. In addition, the liquid crystal panel scribing and breaking line **200B** having the above-described configuration is applied only to a bonded mother substrate in which liquid crystal has already been sealed with a liquid crystal dropping method. In other words, the liquid crystal panel scribing and breaking line **200B** cannot be configured in the conventional production process of a liquid crystal panel requiring an injection step of injecting liquid crystal into the liquid crystal panel **5C.**

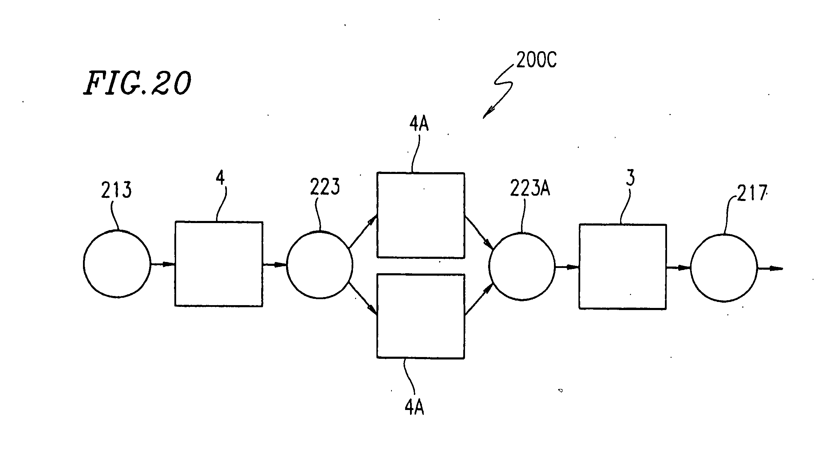

Figure **20** is a configuration diagram showing another exemplary liquid crystal panel scribing and breaking line, in which the glass substrate polishing apparatus **3** described in Comparative example 3 is used instead of the chamfering apparatus **267** which chamfers the edge of each end face of the liquid crystal panel **5C** in the liquid crystal panel scribing and breaking line **200A** of Figure **17**. The other configuration is the same as that of the liquid crystal panel scribing and breaking line **200A** of Figure **17**. The detailed description of the glass substrate polishing apparatus **3** is provided above, and therefore, is omitted.

In the liquid crystal panel scribing and breaking line **200C** having the above-described configuration, by using the glass substrate polishing apparatus 3 of Comparative example 3, it is possible to easily handle the case where the size of the liquid crystal panel **5C** (glass substrate) is changed. Therefore, it is possible to efficiently obtain a liquid crystal panel which is chamfered after scribing and breaking.

It should be noted that the liquid crystal panel scribing and breaking line **200C** comprises glass scribers **4** and **4A**, and at least one glass substrate polishing apparatus **3**. In addition, the liquid crystal panel scribing and breaking line **200C** having the above-described configuration is applied only to a bonded mother substrate in which liquid crystal has already been sealed with a liquid crystal dropping method. In other words, the liquid crystal panel scribing and breaking line **200C** cannot be configured in the conventional production process of a liquid crystal panel requiring an injection step of injecting liquid crystal into the liquid crystal panel **5C.**

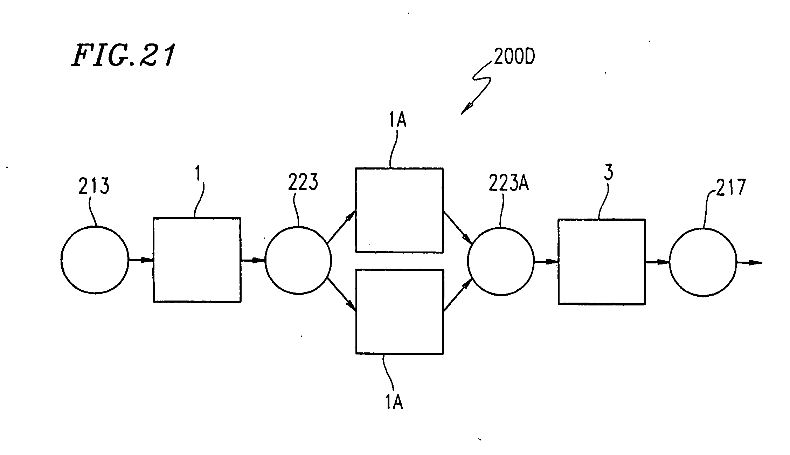

Figure **21** is a configuration diagram showing still another exemplary liquid crystal panel scribing and breaking line, in which a glass scriber **1** of Embodiment 1 and a pair of glass scribers **1A** of Embodiment 1 are used instead of a glass scriber **4** of Comparative example 4 and a pair of glass scribers **4A** of Embodiment 4 in the liquid crystal panel scribing and breaking line **200C** of Figure **20**. The other configuration is the same as that of the liquid crystal panel scribing and breaking line **200C** of Figure **20****.** The detailed description of the glass scribers **1** and **1A** of Embodiment 1 is provided above, and therefore, is omitted.

Thus, in the liquid crystal panel scribing and breaking line **200D**, it is possible to efficiently obtain a large size liquid crystal panel **5C** which is separated and chamfered, because of the use of the glass scribers **1** and **1A** of Embodiment **1**. In addition, even when one of the glass scribers **1A** happens not to work, the scribing and breaking process can be continued by the other glass scriber **1A.** Therefore, it is possible to prevent a reduction in operating efficiency.

It should be noted that the liquid crystal panel scribing and breaking line **200D** comprises glass scribers **1** and **1A,** and at least one glass substrate polishing apparatus **3.** In addition, the liquid crystal panel scribing and breaking line **200D** having the above-described configuration is applied only to a bonded mother substrate in which liquid crystal has already been sealed with a liquid crystal dropping method. In other words, the liquid crystal panel scribing and breaking line **200D** cannot be configured in the conventional production process of a liquid crystal panel requiring an injection step of injecting liquid crystal into the liquid crystal panel **5C.**

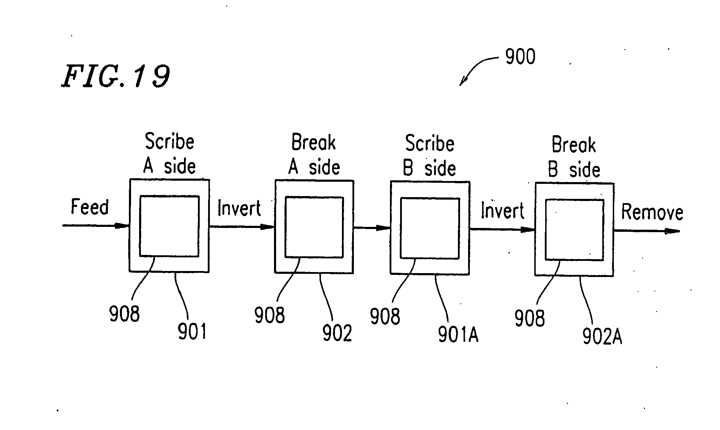

Figure **19** is a configuration diagram of a scribing and breaking line **900** as a comparative example. The liquid crystal panel scribing and breaking line **900** comprises a scribing apparatus **901**. The scribing apparatus **901** scribes an upper glass substrate (hereinafter also referred to as an "A side substrate") of two glass substrates constituting a mother glass substrate **908.** A breaking apparatus **902** is provided downstream of the scribing apparatus **901**. The breaking apparatus **902** breaks the A side substrate along a scribed line formed on the A side substrate.

A scribing apparatus **901A** is provided downstream of the breaking apparatus **902**. The scribing apparatus **901A** has the same configuration as that of the scribing apparatus **901**, and scribes the substrate (hereinafter also referred to as a "B side substrate") other than the A side substrate of the two glass substrates constituting the bonded mother glass substrate **908**.

A breaking apparatus **902A** is provided downstream of the scribing apparatus **901A**. The breaking apparatus **902A** has the same configuration as that of the breaking apparatus **902**, and scribes the B side substrate along a scribed line formed on the B side substrate.

An operation of the liquid crystal panel scribing and breaking line **900** having the above-described configuration will be described. The scribing apparatus **901** forms a scribed line on an A side substrate when the bonded mother glass substrate **908** is placed by a feeding mechanism (not shown) in a manner such that the A side substrate thereof is located at an upper side thereof.

The mother glass substrate **908**, the A side substrate of which has been scribed by the scribing apparatus **901**, is inverted by an inverting mechanism (not shown), so that the mother glass substrate **908** is placed on the breaking apparatus **902** in a manner such that the A side substrate thereof is located at the lower side thereof. In this case, the breaking apparatus **902** presses the B side substrate from above along the scribed line, thereby breaking the A side substrate along the scribed line.

The mother glass substrate **908**, the A side substrate of which has been broken by the breaking apparatus **902**, is transported by a transport mechanism (not shown), and is placed on the scribing apparatus **901A** in a manner so that the A side substrate thereof is located at the lower side thereof. The scribing apparatus **901A** forms a scribed line on the B side substrate.

The mother glass substrate **908**, the B side substrate of which has been scribed by the scribing apparatus **901A**, is inverted by an inverting mechanism (not shown), and is placed on the breaking apparatus **902A** in a manner such that the B side substrate thereof is located at the lower side thereof. In this case, the breaking apparatus **902A** presses the **A** side substrate from above along the scribed line, thereby breaking the B side substrate along the scribed line.

As described above, the liquid crystal panel scribing and breaking line **900** (comparative example) requires the inverting step of inverting a mother glass substrate and the breaking step of breaking the mother glass substrate. In contrast, the inverting step and the breaking step can be eliminated in the liquid crystal panel scribing and breaking lines **100**, **200**, **200A**, **200B**, **200C** and **200D** which use the above-described scriber of Comparative example 4 described above with reference to Figures **15** to **18**, **20** and **21**.

In addition, by using the scriber of Embodiment 1, the breaking step can be eliminated and a large size bonded mother glass substrate can be accurately scribed and broken.

In other production steps of a liquid crystal panel including the above-described step called a drop injection step, a liquid crystal injecting step which is conventionally a bottle neck in terms of a tact time is replaced with a drop injection step, so that the tact time of the step of injecting liquid crystal can be reduced. Therefore, it is necessary to reduce the tact time of steps other than the liquid crystal injecting step.

Further, in conventional liquid crystal panel production processes, a scribing and breaking step is performed before a liquid crystal injecting step. Therefore, a bonded panel can be inverted and a breaking bar can be used to break a side opposing a scribed line. However, in another liquid crystal panel production process, since liquid crystal has been injected into a panel by a drop method before a scribing step and a breaking step, it is not permitted in actual production processes to invert a bonded panel having injected liquid crystal in the scribing step and the breaking step, much less to break the bonded panel. This is because if a bonded panel having injected liquid crystal is inverted or broken, the force is exerted onto the seal material, producing a slight influence on the sealed state of the enclosed liquid crystal. An adverse influence is likely to be produced on the sealing life of the liquid crystal or the display quality of a liquid crystal panel.

It has been necessary to study the reduction of a tact time and the removal of the inverting step of inverting a bonded panel and the breaking step. The present applicant diligently studied the possibility of removing the breaking step by scribing using a highly penetrative blade edge disclosed in commonly-assigned Japanese Patent No. 3074143. As a result, the conventional breaking step can be removed by simultaneously scribing and breaking both the upper and lower surfaces of a bonded glass substrate using the highly penetrative blade edge.

In order to flexibly address the tendency of increasing the size of a bonded mother glass substrate and lot changes, a smaller motor is used for a rotating table of a scriber, and a two stage positioning mechanism is employed in a rotating table mechanism to secure positioning precision.

### INDUSTRIAL APPLICABILITY

As described above, a glass scriber comprising a rotating table capable of positioning a large size mother glass substrate with low cost and required precision can be provided.

In addition, a glass scriber comprising a bridge mechanism capable of smoothly moving a supporting post can be provided.

In addition, a glass substrate polishing apparatus which does not require changing of suction tables can be provided.

In addition, a glass scriber capable of scribing a bonded mother substrate without damaging liquid crystal which has already been injected into the bonded mother glass substrate with a liquid crystal drop injection method, can be provided.

## Claims

1. A scribing and breaking system, comprising:
at least one scribing means for processing a brittle material substrate (5) to separate the brittle material substrate into smaller substrates;
a rotating table (11) for placing the brittle material substrate (5), having a rotating portion (31) which is rotated by a driving means (15) and fixing portion (32) which holds the rotating portion (31);
a first stopper member (18) and a second stopper member (12) provided on the rotating table (11) for positioning the rotating portion (31) of the rotating table (11) at a first engaging position and a second engaging position, respectively;
a fine adjustment mechanism (20) provided between the first engaging position and the second engaging position to position the first stopper member (18) and the second stopper member (12) and is adapted to make a positioning of the rotating table (11) at the first stopped position by engaging with the first stopper member (18), and to make a positioning of the rotating table (11) at the second stopped position by engaging with the second stopper member (12);
a fine adjustment mechanism driving means (21) for reciprocating the fine adjustment mechanism (20) in small amounts, which is adapted to make an adjustment of the position of the first stopper member (18) which is in a state contacting with the fine adjustment mechanism (20) by means of moving the fine adjustment mechanism (20), and to make an adjustment of the position of the second stopper member (12) which is at a state of contacting with the fine adjustment mechanism (20),
wherein after the rotating table (11) is positioned with a predetermined first precision by rotating the first stopper member (18) and the second stopper member (12) by the rotation of the rotating table (11) to abut the fine adjustment mechanism (20), the fine adjustment mechanism (20) is moved in small amounts by the fine adjustment mechanism driving means to position the rotating table (11) with a second precision higher than the first precision.

2. A scribing and breaking system according to claim 1, further comprising:
a brittle material substrate polishing apparatus (3) for polishing an end face of a brittle material substrate (5A) separated by the scriber,
wherein the brittle material substrate polishing apparatus (3) comprises:
a pair of tables (153, 154) for placing the brittle material substrate (5A);
a polishing machine (152) for polishing an upper edge and a lower edge of a side edge of the brittle material substrate (5A) placed on the table;
a polishing machine moving mechanism for moving the polishing machine (152) in parallel to the side edge; and
an adjusting means wherein the pair of tables (153, 154) are provided in parallel to a pair of side edges (8) facing each other of the brittle material substrate (5A), and an interval between the tables is adjusted depending on a size of the brittle material substrate (5A).

3. A scribing and braking system for a brittle material substrate according to any one of claims 1 to 2, wherein the scribing means is a cutter wheel chip (28).

4. A scribing and breaking system for a brittle material substrate (5) according to claim 3, wherein the cutter wheel chip (28) has a blade edge formed at a ridgeline portion of the disk-like wheel, and a plurality of groove portions are formed at the ridgeline portion at a predetermined pitch.

5. A scribing and breaking system for a brittle material substrate (5) according to claim 3, wherein the cutter wheel chip (28) is vibrated with respect to a glass substrate so that a pressing force on the glass substrate is changed periodically.

6. A scribing and breaking system for a brittle material substrate (5) according to claim 3, wherein the cutter wheel chip (28) is elevated and lowered by a servo motor.

7. A scribing and breaking system for a brittle material substrate (5) according to any one of claims 1 to 2, wherein the scribing means is moved along a predetermined scribing line after a difference between a scribed line and the predetermined scribing line is corrected.

## Patentansprüche

1. Ritz- und Brechsystem, mit:
mindestens einer Ritzeinrichtung zum Bearbeiten eines Substrats aus sprödem Material (5), um das Substrat aus sprödem Material in kleinere Substrate zu teilen;
einem Drehtisch (11) zum Platzieren des Substrats aus sprödem Material (5), der einen Drehabschnitt (31), der durch eine Dreheinrichtung (15) gedreht wird, und einen Befestigungsabschnitt (32) hat, der den Drehabschnitt (31) hält;
einem ersten Stopperbauteil (18) und einem zweiten Stopperbauteil (12), die an dem Drehtisch (11) vorgesehen sind, um den Drehabschnitt (31) des Drehtisches (11) jeweils an einer ersten Eingriffsposition und einer zweiten Eingriffsposition zu positionieren;
einem Feineinstellmechanismus (20), der zwischen der ersten Eingriffsposition und der zweiten Eingriffsposition vorgesehen ist, um das erste Stopperbauteil (18) und das zweite Stopperbauteil (12) zu positionieren, und der angepasst ist, um den Drehtisch (11) an der ersten Stoppposition durch Eingreifen mit dem ersten Stopperbauteil (18) zu positionieren, und den Drehtisch (11) an der zweiten Stoppposition durch Eingreifen mit dem zweiten Stopperbauteil (12) zu positionieren;
einer Antriebseinrichtung des Feineinstellmechanismus (21) zum Vor- und Zurückbewegen des Feineinstellmechanismus (20) in kleinen Beträgen, die angepasst ist, um die Position des ersten Stopperbauteils (18), das in einem Zustand ist, in dem es mit dem Feineinstellmechanismus (20) in Berührung ist, durch das Bewegen des Feineinstellmechanismus (20) einzustellen, und um die Position des zweiten Stopperbauteils (18) einzustellen, das in einem Zustand ist, in dem es mit dem Feineinstellmechanismus (20) in Berührung ist,
wobei, nachdem der Drehtisch (11) mit einer vorbestimmten ersten Genauigkeit durch Drehen des ersten Stopperbauteils (18) und des zweiten Stopperbauteils (12) durch die Drehung des Drehtisches (11) positioniert ist, um an dem Feineinstellmechanismus (20) anzuliegen, der Feineinstellmechanismus (20) in kleinen Beträgen durch die Antriebseinrichtung des Feineinstellmechanismus bewegt wird, um den Drehtisch (11) mit einer zweiten Genauigkeit zu positionieren, die höher ist als die erste Genauigkeit.

2. Ritz- und Brechsystem nach Anspruch 1, ferner mit:
einer Poliervorrichtung für Substrate aus sprödem Material (3) zum Polieren einer Stirnläche eines Substrats aus sprödem Material (5A), die durch den Ritzer getrennt ist,
wobei die Poliervorrichtung für Substrate aus sprödem Material (3) aufweist:
ein Paar Tische (153, 154) zum Platzieren des Substrats aus sprödem Material (5A);
eine Poliermaschine (152) zum Polieren einer oberen Kante und einer unteren Kante eines Seitenrands des auf dem Tisch platzierten Substrats aus sprödem Material (5A);
einen Bewegungsmechanismus der Poliermaschine zum Bewegen der Poliermaschine (152) parallel zu dem Seitenrand; und
eine Einstelleinrichtung, wobei das Paar Tische (153, 154) parallel zu einem Paar einander zugewandter Seitenränder (8) des Substrats aus sprödem Material (5A) vorgesehen ist, und ein Abstand zwischen den Tischen in Abhängigkeit von einer Größe des Substrats aus sprödem Material (5A) eingestellt ist.

3. Ritz- und Brechsystem für ein Substrat aus sprödem Material nach einem der Ansprüche 1 bis 2, wobei das Ritzsystem ein Schneidradchip (28) ist.

4. Ritz- und Brechsystem für ein Substrat aus sprödem Material (5) nach Anspruch 3, wobei der Schneidradchip (28) eine an einem Kammlinienabschnitt des scheibenförmigen Rads ausgebildete Schneide hat und eine Vielzahl Nutabschnitte an dem Kammlinienabschnitt mit einer vorbestimmten Teilung ausgebildet sind.

5. Ritz- und Brechsystem für ein Substrat aus sprödem Material (5) nach Anspruch 3, wobei der Schneidradchip (28) in Bezug auf ein Glassubstrat vibriert wird, so dass sich eine Anpresskraft auf das Glassubstrat periodisch ändert.

6. Ritz- und Brechsystem für ein Substrat aus sprödem Material (5) nach Anspruch 3, wobei der Schneidradchip (28) durch einen Servomotor gehoben und gesenkt wird.

7. Ritz- und Brechsystem für ein Substrat aus sprödem Material (5) nach einem der Ansprüche 1 bis 2, wobei die Ritzeinrichtung entlang einer vorbestimmten Ritzlinie bewegt wird, nachdem ein Unterschied zwischen einer geritzten Linie und der vorbestimmten Ritzlinie korrigiert ist.

## Revendications

1. Système de rayure et cassure, comprenant :
au moins un moyen de rayure pour traiter un substrat en matériau fragile (5) afin de le séparer en plus petits substrats ;
une table tournante (11) pour placer le substrat en matériau fragile (5), ayant une partie tournante (31) qui est mise en rotation à l'aide d'un moyen d'entraînement (15) et une partie de fixation (32) qui maintient la partie tournante (31) ;
un premier élément d'arrêt (18) et un deuxième élément d'arrêt (12) prévus sur la table tournante (11) pour positionner la partie tournante (31) de la table tournante (11) à une première position d'engagement et une deuxième position d'engagement, respectivement ;
un mécanisme de réglage fin (20) prévu entre les première et deuxième positions d'engagement afin de positionner le premier élément d'arrêt (18) et le deuxième élément d'arrêt (12) et est adapté pour positionner la table tournante (11) dans la première position arrêtée par engagement avec le premier élément d'arrêt (18), et de positionner la table tournante (11) dans la deuxième position arrêtée par engagement avec le deuxième élément d'arrêt (12) ;
un moyen d'entraînement (21) du mécanisme de réglage fin pour animer le mécanisme de réglage fin (20) de petits mouvements de va et vient, qui est adapté pour régler la position du premier élément d'arrêt (18) qui est en contact avec le mécanisme de réglage fin (20) en déplaçant le mécanisme de réglage fin (20), et de régler la position du deuxième élément d'arrêt (12) qui est en contact avec le mécanisme de réglage fin (20),
dans lequel après positionnement de la table tournante (11) avec une première précision prédéterminée en tournant le premier élément d'arrêt (18) et le deuxième élément d'arrêt (12) par rotation de la table tournante (11) pour venir en butée contre le mécanisme de réglage fin (20), le mécanisme de réglage fin (20) est déplacé par petits mouvements par le moyen d'entraînement du mécanisme de réglage fin afin de positionner la table tournante (11) avec une deuxième précision supérieure à la première précision.

2. Système de rayure et de cassure selon la revendication 1, comprenant en outre :
un appareil de polissage (3) du substrat en matériau fragile pour le polissage d'une face d'extrémité d'un substrat en matériau fragile (5A) séparé par le dispositif de rayure,
dans lequel l'appareil de polissage (3) du substrat en matériau fragile comprend :
une paire de tables (153, 154) pour placer le substrat en matériau fragile (5A);
une machine de polissage (152) pour le polissage des bords supérieur et inférieur d'un bord latéral du substrat en matériau fragile (5A) placé sur la table ;
un mécanisme de déplacement de la machine de polissage pour déplacer la machine de polissage (152) parallèlement au bord latéral, et
un moyen de réglage où la paire de tables (153, 154) sont prévues parallèles à une paire de bords latéraux (8) du substrat en matériau fragile (5A), qui se regardent, et un intervalle entre les tables est réglé en fonction de la dimension du substrat en matériau fragile (5A).

3. Système de rayure et de cassure pour un substrat en matériau fragile selon l'une quelconque des revendications 1 à 2, dans lequel le moyen de rayure est une puce de molette coupante (28).

4. Système de rayure et de cassure d'un substrat en matériau fragile (5) selon la revendication 3, dans lequel la puce de molette coupante (28) a un bord de lame formé au niveau d'une partie de ligne d'arête de la molette en forme de disque, et une pluralité de parties de rainure sont formées au niveau de la partie de ligne d'arête avec un pas prédéterminé.

5. Système de rayure et de cassure d'un substrat en matériau fragile (5) selon la revendication 3, dans lequel la puce de molette coupante (28) vibre par rapport à un substrat en verre de sorte qu'une force de pression sur le substrat en verre soit modifiée périodiquement.

6. Système de rayure et de cassure d'un substrat en matériau fragile (5) selon la revendication 3, dans lequel la puce de molette coupante (28) est élevée et abaissée par un servomoteur.

7. Système de rayure et de cassure d'un substrat en matériau fragile (5) selon l'une quelconque des revendications 1 à 2, dans lequel le moyen de rayure est déplacé le long d'une ligne de rayure prédéterminée après correction d'une différence entre une ligne rayée et la ligne de rayure prédéterminée.
